(19) Europäisches Patentamt

European Patent Office

Office européen des brevets

(11) **EP 1 293 752 A1**

(12) **EUROPEAN PATENT APPLICATION**

(43) Date of publication:
**19.03.2003 Bulletin 2003/12**

(51) Int Cl.7: **G01B 7/30**

(21) Application number: **02020355.0**

(22) Date of filing: **12.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **14.09.2001 JP 2001280374**

(71) Applicant: **KOYO SEIKO CO., LTD.**
**Osaka 542-0081 (JP)**

(72) Inventors:
• **Tokumoto, Yoshitomo**
  **Chuo-ku, Osaka 542-0081 (JP)**
• **Shiba, Mahito**
  **Chuo-ku, Osaka 542-0081 (JP)**
• **Maeda, Naoki**
  **Chuo-ku, Osaka 542-0081 (JP)**

(74) Representative: **Selting, Günther, Dipl.-Ing. et al**
**Patentanwälte**
**von Kreisler, Selting, Werner**
**Postfach 10 22 41**
**50462 Köln (DE)**

(54) **Rotational angle detecting device, torque detecting device and steering apparatus**

(57)    The difference between the maximum value and minimum value of an output of each of magnetic sensors, which was outputted during the passage of one target, is calculated, and gain is corrected based on the calculated difference. An average value of the maximum value and minimum value is calculated, and offset is corrected based on the calculated average value. Accordingly, it is possible to realize a rotational angle detecting device, a torque detecting device and a steering apparatus, capable of accurately detecting a rotational angle and rotational torque without being affected by the difference in the output characteristics of the magnetic sensors and the change in the air gaps between the targets and the respective magnetic sensors.

FIG. 1

**EP 1 293 752 A1**

**EP 1 293 752 A1**

**Description**

BACKGROUND OF THE INVENTION

1. Field of the Invention

The present invention relates to a rotational angle detecting device for detecting the rotational angle of a rotating shaft; a torque detecting device for detecting a torque applied to the rotating shaft; and a steering apparatus for automobiles, comprising such rotational angle detecting device and the torque detecting device.

2. Description of Related Art

In comparison with a hydraulic power steering apparatus that uses a hydraulic actuator as the power source of steering assist force, an electric power steering apparatus that assists steering by driving a steering assist electric motor based on the result of the detection of the steering torque applied to a steering wheel for steering and by transmitting a rotational force of the motor to a steering mechanism, has the advantage of easily controlling the assist force characteristics according to the high or low vehicle speed, the frequency of steering and the travelling state. For this reason, the range of its application has being expanded in recent years.

Since the electric power steering apparatus as described above needs a torque detecting device for detecting the steering torque, it uses a torque detecting device that connects an input shaft on the steering wheel side and an output shaft on the steering mechanism side to each other through a torsion bar having a small diameter, detects a relative angular displacement caused between the two shafts with torsion of the torsion bar because of the function of the steering torque, and calculates the steering torque based on the result of this detection.

Besides, in the electric power steering apparatus, it is also necessary to detect the rotational angle of the input shaft from the steering midpoint, that is, the steering angle, for use in the drive control of the steering assist motor. Therefore, the electric power steering apparatus uses a rotational angle detecting device for detecting the steering angle.

In general, the torque detecting device and rotational angle detecting device as described above are constructed as separate devices. Hence, there are problems that it takes a lot of work and time for the assembly of the respective devices, including the adjustment work. Moreover, many of these detecting devices have a sliding contact portion, such as a potentiometer, and their outputs change with time due to the abrasion of the sliding contact portions. Thus, they have a problem of poor durability. Further, as the torque detecting device, there has been a practical device that detects the relative angular displacement caused between the input shaft and the output shaft with torsion of the torsion bar because of the function of the steering torque, based on a change in the impedance of a magnetic circuit formed at the connection of the two shafts. However, this device suffers from problems of complicated construction and high manufacturing costs.

In order to solve such problems, in Japanese Patent Application Laid-Open No. 2000-352502 (which is one of priority application of European Patent Publication No. 1087218A1), etc, the applicant of the present application proposed a torque and rotational angle detecting device that has simple construction and is capable of detecting the torque and the rotational angle together in a non-contact manner. This device is constructed by providing a rotational angle detecting device for each of the input shaft and the output shaft at the connected portion thereof. The rotational angle detecting device is constructed by juxtaposing a plurality of targets, which are made of magnetic material and incline at a substantially equal angle with respect to the axial direction, in the circumferential direction of the outer circumference of a rotating shaft subjected to detection and by disposing magnetic sensors for outputting outputs varying according to the passage of the targets, at opposite positions outside the position of the targets.

According to this structure, during one rotation of the rotating shaft, each magnetic sensor outputs a voltage varying substantially linearly at a cycle corresponding to the number of the targets juxtaposed. It is therefore possible to separately detect the rotational angles of the input shaft and output shaft based on the outputs of the corresponding magnetic sensors. Moreover, it is possible to calculate the rotational torque (steering torque) applied to the input shaft as a result of handling the steering wheel, based on the difference between the rotational angles of the two shafts given as the difference between the outputs of the magnetic sensors corresponding to the input shaft and output shaft.

Further, the targets juxtaposed on the outer circumference of the rotating shaft as described above have a partially spiral form inclining at a substantially equal angle with respect to the axial direction, and discontinuous portions corresponding to the number of the targets juxtaposed in the circumferential direction exist. Therefore, nonlinearly-changed regions corresponding to the discontinuous portions appear in the outputs of the opposing magnetic sensors, and thus there is a problem that the output obtained in such a nonlinearly changed region can not be used for the calculation of the rotational angle. Hence, conventionally, two magnetic sensors are juxtaposed in the circumferential direction, outside of the position of the targets, and, when one of the outputs is in a nonlinearly-changed region, the output of the other magnetic sensor is used, thereby enabling the detection of the rotational angle over the entire circumference.

Thus, the rotational angle detecting device and the torque detecting device comprising two sets of the rotational angle detecting device proposed in Japanese Patent Application Laid-Open No. 2000-352502 (included in European Patent Publication No. 1087218A1), etc, are devices that have simple construction and are capable of detecting the rotational angle and rotational torque of a rotating shaft subjected to detection together in a non-contact manner, and can be suitably used for drive control of the steering assist motor in an electric power steering apparatus as mentioned above.

However, the output characteristics of the magnetic sensors are not constant and are susceptible to the influence of ambient temperature. It is impossible to prevent errors from being caused in the result of calculating the rotational angle based on the outputs of the magnetic sensors because of the difference between the characteristics. Hence, the structure comprising two magnetic sensors in the circumferential direction of the targets as described above suffers from a problem that the difference in the output characteristics of the magnetic sensors causes a lowering of the detection accuracy of the rotational angle.

For this reason, conventionally, the output characteristics of the magnetic sensors, including characteristic change due to temperature, are investigated individually, gains by which the respective outputs are multiplied are determined individually, and the obtained magnetic sensor output is multiplied by the corresponding gain, thereby preventing the above-mentioned errors due to the difference between the characteristics.

However, since the torque detecting device comprising two sets of the rotational angle detecting device as described above uses a total of four magnetic sensors, there is a problem that a lot of work is required for the setting of the gains, including the temperature compensation, that is performed for each of four magnetic sensors. Furthermore, even when the gains were set accurately, it is impossible to compensate for characteristic change of each magnetic sensor that occurred with the passage of time and difficult to detect the torque and rotational angle with high accuracy over a long time.

If the concentricity between the rotating shaft having the targets and the fixed magnetic sensor is not satisfactorily maintained, or when the rotating shaft is staggered even though the concentricity is satisfactorily maintained, the air gap between the magnetic sensor and the target changes during rotation. Since the change in the air gap affects the output of the magnetic sensor, the detection accuracy of the rotational angle and torque that are calculated based on the output is lowered.

Since the change in the output of the magnetic sensor due to the change in the air gap occurs as the addition of an offset voltage to the normal output, it can not be eliminated by the setting of a gain as described above. Hence, conventionally, the concentricity is satisfactorily maintained during the assembly, and the supporting rigidity is increased to prevent staggering of the rotating shaft. However, there is a drawback that the peripheral structure becomes complicated.

BRIEF SUMMARY OF THE INVENTION

The present invention has been made with the aim of solving the above problems, and it is an object of the present invention to provide a rotational angle detecting device and a torque detecting device, capable of detecting one or both of the rotational angle and rotational torque of a rotating shaft, based on the outputs of magnetic sensors responsive to a target that is made of magnetic material and provided on the rotating shaft, with high accuracy over a long time by preventing detection errors resulting from the difference in the output characteristics of the individual magnetic sensors, including compensation for characteristic change due to temperature and characteristic change with time, and by further preventing detection errors resulting from change in the air gap between the target and the magnetic sensor. A further object is to provide a steering apparatus for automobiles, using the above rotational angle detecting device and torque detecting device.

A rotational angle detecting device according to the first invention is a rotational angle detecting device comprising: detecting means for detecting a position of a target and outputting a detection signal according to the detected position; a rotational member on which the target is provided so that the detection signal changes according to a rotation; and angle calculating means for calculating a rotational angle of the rotational member based on the detection signal multiplied by a gain, and characterized by further comprising: means for detecting a maximum value and a minimum value of the detection signal multiplied by the gain; means for calculating a difference between the detected maximum value and minimum value; and gain correcting means for correcting the gain so that the calculated difference is equal to a preset reference difference.

In this rotational angle detecting device, it is possible to correct the gain by the gain correcting means, based on a difference calculated by the means for detecting the maximum value and minimum value of the detection signal multiplied by the gain and the means for calculating the difference between the maximum value and minimum value. Since the gain is corrected during the detection of the rotational angle, based on the difference between the maximum value and minimum value of the detection signal, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a rotational angle detecting device capable of performing detection with high accuracy over a long time.

A rotational angle detecting device according to the second invention is based on the first invention, and characterized by further comprising: means for calculating a ratio of the calculated difference to the reference difference; and means for calculating a corrective gain by multiplying a preset reference gain by the calculated ratio, wherein the gain correcting means corrects the gain to the corrective gain.

In this rotational angle detecting device, the ratio of the difference between the maximum value and minimum value of the detection signal to the predetermined reference difference can be calculated by the means for calculating the ratio, and the corrective gain can be calculated by the means for calculating the corrective gain by multiplying the preset reference gain by the calculated ratio. By multiplying the detection signal by the corrective gain, it is possible to cause the detection signal to coincide with a reference output characteristic and accurately calculate the rotational angle based on this result.

A rotational angle detecting device according to the third invention is a rotational angle detecting device comprising: detecting means for detecting a position of a target and outputting a detection signal according to the detected position; a rotational member on which the target is provided so that the detection signal changes according to a rotation; and angle calculating means for calculating a rotational angle of the rotational member based on the detection signal multiplied by a gain, and characterized by further comprising: means for detecting a maximum value and a minimum value of the detection signal; means for calculating an average value of the detected maximum value and minimum value: and offset correcting means for correcting the detection signal so that the calculated average value is equal to a preset reference average value.

In this rotational angle detecting device, it is possible to correct the offset of the detection signal by the offset correcting means, based on an average value calculated by the means for detecting the maximum value and minimum value of the detection signal and the means for calculating an average value of the maximum value and minimum value. Since the offset is corrected during the detection of the rotational angle, based on the average value of the maximum value and minimum value of the detection signal, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a rotational angle detecting device capable of performing detection with high accuracy over a long time.

A rotational angle detecting device according to the fourth invention is based on the third invention, and characterized by further comprising means for calculating a difference between the calculated average value and the reference average value, wherein the offset correcting means adds the difference to the detection signal value so that the calculated difference becomes zero.

This rotational angle detecting device calculates the difference between the average value of the maximum value and minimum value of the detection signal and a preset reference average value by the means for calculating the difference, and adds the calculated difference to the detection signal to invalidate the offset and eliminate the influence of change in the air gap, thereby accurately calculating the rotational angle.

A rotational angle detecting device according to the fifth invention is based on any one of the first through fourth inventions, and characterized in that the target is provided on the rotational member so that a distance between the target and the detecting means changes according to a rotation.

In this rotational angle detecting device, the distance between the detecting means and the target changes according to a rotation of the rotational member, and the detection signal changes according to the change in the distance. It is therefore possible to calculate the rotational angle of the rotational member by the angle calculating means, based on the change in the detection signal.

A rotational angle detecting device according to the sixth invention is based on any one of the first through fourth inventions, and characterized in that the target is made of protrusions provided at substantially equal intervals in a circumferential direction of the rotational member.

In this rotational angle detecting device, since the detection signal changes according to the distance between the detecting means and the protrusion approaching the detecting means according to a rotation of the rotational member, it is possible to calculate the rotational angle of the rotational member by the angle calculating means, based on the change in the detection signal.

A rotational angle detecting device according to the seventh invention is based on any one of the first through fourth inventions, and characterized in that the target is made of non-dent portions between dents formed at substantially equal intervals in a circumferential direction of the rotational member so as to create the non-dent portions.

In this rotational angle detecting device, a dent portion and a non-dent portion alternately approaches the detecting means according to a rotation of the rotational member, and the detection signal changes according to the distance from the dent portion or the non-dent portion. It is therefore possible to calculate the rotational angle of the rotational member by the angle calculating means, based on the change in the detection signal. Examples of the dent portion include a non-through hole and a through hole.

A rotational angle detecting device according to the eighth invention is based on any one of the first through fourth inventions, and characterized in that the target is magnetized so that magnetic poles reverse at substantially equal intervals in a circumferential direction of the rotational member.

In this rotational angle detecting device, the polarity of the magnetic pole approaching the detecting means according to a rotation of the rotational member changes alternately between positive and negative (N and S), and the detection signal according to the distance between the detecting means and the magnetic pole is outputted. It is therefore possible to calculate the rotational angle of the rotational member by the angle calculating means, based on the change in the detection signal.

A rotational angle detecting device according to the ninth invention is based on any one of the first through eighth inventions, and characterized in that the detecting means comprises first detecting means and second detecting means, juxtaposed in a direction of rotation of the rotational member, for outputting detection signals having a phase difference.

In this rotational angle detecting device, it is possible to mutually compensate for regions of the detection signals having a small change with respect to the rotational angle by the first and second detecting means for outputting detection signals having a phase difference.

A rotational angle detecting device according to the tenth invention is based on the ninth invention, and characterized by comprising: first judging means for judging whether or not each of the detection signals of the first detecting means and second detecting means is higher than a first threshold greater than a detection signal value obtained when detection signal waveforms of the first detecting means and second detecting means crossed each other; second judging means for judging whether or not each of the detection signals of the first detecting means and second detecting means is lower than a second threshold smaller than a detection signal value obtained when the detection signal waveforms of the first detecting means and second detecting means crossed each other; and third judging means for judging whether or not the detection signal waveforms of the first detecting means and second detecting means cross each other; wherein the maximum value and minimum value of the detection signal are detected based on results of judgements made by the first, second and third judging means.

In this rotational angle detecting device, the first judging means judges whether or not each of the detection signals of the first detecting means and second detecting means is higher than the first threshold, the second judging means judges whether or not each of the detection signals of the first detecting means and second detecting means is lower than the second threshold, the third judging means judges whether or not the detection signal waveforms of the first detecting means and second detecting means cross each other, and the maximum value and minimum value are detectable based on the results of the judgements made by the first, second and third judging means.

A torque detecting device according to the eleventh invention is characterized by comprising: the rotational angle detecting devices of any one of the first through tenth inventions, provided for each of a first rotating shaft and a second rotating shaft which are coaxially connected to each other; and torque calculating means for calculating a torque applied to the first rotating shaft, based on a difference between rotational angles detected by the rotational angle detecting devices.

In this torque detecting device, the torque calculating means calculates a torque applied to the first rotating shaft, based on the difference between the rotational angles detected by the rotational angle detecting devices of any one of the first through tenth inventions provided for the first rotating shaft and the second rotating shaft. It is possible to prevent detection errors resulting from the difference in the output characteristics of the individual detecting means by including compensation for characteristic change due to temperature and characteristic change with time and further prevent detection errors resulting from change in the air gap between the target and the detecting means by correcting the gain and/or offset by the gain correcting means and/or the offset correcting means, thereby realizing a torque detecting device capable of performing detection with high accuracy over a long time.

A torque detecting device according to the twelfth invention is characterized by comprising: the rotational angle detecting devices of the ninth or tenth invention, provided for each of a first rotating shaft and a second rotating shaft which are coaxially connected to each other; and torque calculating means for calculating a torque applied to the first rotating shaft, based on a difference between rotational angles detected by the rotational angle detecting devices, wherein, when both the first detecting means and both the second detecting means of the rotational angle detecting devices detected the maximum values, the maximum values are made valid, while when both the first detecting means and both the second detecting means detected the minimum values, the minimum values are made valid.

In this torque detecting device, when both the first detecting means and second detecting means of the rotational angle detecting devices provided for the first and second rotating shafts detected the maximum values, the maximum values are made valid. When they detected the minimum values, the minimum values are made valid. Accordingly, it is possible to realize a torque detecting device capable of preventing correction errors due to a difference in the detecting timings of the maximum value and the minimum value resulting from torsion caused by the application of torque in the rotational angle detecting devices provided at two positions.

A torque detecting device according to the thirteenth invention is based on the twelfth invention, and characterized by further comprising: temperature detecting means for detecting temperature of the first detecting means and second detecting means; storing means for storing a temperature detected by the temperature detecting means when the maximum value or the minimum value of each of the detection signals of the first detecting means and second detecting means was detected; and means for calculating a difference between the temperature detected by the temperature detecting means and the temperature stored by the storing means and comparing the calculated difference with a predetermined value when the angle calculating means calculates the rotational angle, wherein, when the difference is greater than the predetermined value, the calculation by the angle calculating means is prohibited.

In this torque detecting device, the temperature detecting means detects the temperature of the first detecting means and second detecting means, and the storing means stores a temperature detected when the maximum value or the minimum value of each of the detection signals of the first detecting means and second detecting means was detected. Moreover, when the angle calculating means calculates the rotational angle, the comparing means calculates the difference between the temperature detected by the temperature detecting means and the temperature stored by the storing means, and compares the calculated difference with a predetermined value. When the difference is greater than the predetermined value, the calculation by the angle calculating means is prohibited, thereby realizing a torque detecting device capable of preventing detection errors resulting from the difference in the temperature characteristics of the individual detecting means.

A steering apparatus according to the fourteenth invention is characterized by comprising: a first rotating shaft connected to a steering wheel; a second rotating shaft connected coaxially to the first rotating shaft and connected to a steering mechanism; the torque detecting device of any one of the eleventh through thirteenth inventions, for detecting a steering torque applied to the first rotating shaft; and an electric motor for assisting a rotation of the second rotating shaft, based on the steering torque.

Since this steering apparatus comprises the torque detecting device of any one of the eleventh through thirteenth inventions, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a steering apparatus for automobiles, using a torque detecting device capable of detecting a torque with high accuracy over a long time.

The above and further objects and features of the invention will more fully be apparent from the following detailed description with accompanying drawings.

BRIEF DESCRIPTION OF THE SEVERAL VIEWS OF THE DRAWINGS

FIG. 1 is a schematic view showing the constructions of a rotational angle detecting device and a torque detecting device of the present invention applied to a steering apparatus for an automobile;
FIG. 2 is a graph showing an example of change in the output voltages of magnetic sensors;
FIG. 3 is a graph showing another example of change in the output voltages of the magnetic sensors;
FIG. 4 is a flow chart showing the contents of gain and offset correcting operations;
FIG. 5 is a graph explaining corrective gain;
FIG. 6 is a graph explaining an offset amount;
FIG. 7 is a schematic view showing the constructions of a rotational angle detecting device and a torque detecting device of an embodiment of the present invention applied to a steering apparatus for an automobile;
FIG. 8 is a table showing detection mode 0 through mode 6;
FIG. 9 is a waveform chart showing the waveforms of the output voltages of the magnetic sensors;
FIG. 10 is a flow chart showing the operations of the rotational angle detecting device and torque detecting device of the present invention;
FIG. 11 is a flow chart showing the operations of detecting and updating the maximum and minimum values of the output voltages of the magnetic sensors of the rotational angle detecting device and torque detecting device of the present invention;
FIG. 12A, FIG. 12B and FIG. 12C are flow charts showing the operations of the rotational angle detecting device and torque detecting device of the present invention;
FIG. 13 is a flow chart showing the operations of the rotational angle detecting device and torque detecting device of the present invention in initial mode 0;

FIG. 14 is a flow chart showing the operations of the rotational angle detecting device and torque detecting device of the present invention in detection mode 1;

FIG. 15 is a flow chart showing the operations of the rotational angle detecting device and torque detecting device of the present invention in detection mode 2;

FIG. 16 is a flow chart showing the operations of the rotational angle detecting device and torque detecting device of the present invention in detection mode 3;

FIG. 17 is a flow chart showing the operations of the rotational angle detecting device and torque detecting device of the present invention in detection mode 4;

FIG. 18 is a flow chart showing the operations of the rotational angle detecting device and torque detecting device of the present invention in detection mode 5;

FIG. 19 is a flow chart showing the operations of the rotational angle detecting device and torque detecting device of the present invention in detection mode 6;

FIG. 20 is a schematic view showing the constructions of a rotational angle detecting device and a torque detecting device of an embodiment of the present invention applied to a steering apparatus for an automobile;

FIG. 21 is a flow chart showing the operations of the rotational angle detecting device and torque detecting device of the present invention;

FIG. 22 is a flow chart showing the operations of detecting and updating the maximum and minimum values of the output voltages of the magnetic sensors of the rotational angle detecting device and torque detecting device of the present invention;

FIG. 23 is a flow chart showing the operations of detecting and updating the maximum and minimum values of the output voltages of the magnetic sensors of the rotational angle detecting device and torque detecting device of the present invention;

FIG. 24 is a flow chart showing the operation of judging a clear condition of a detection condition flag of the rotational angle detecting device and torque detecting device of the present invention;

FIG. 25 is a view showing another example of the rotational member and targets of the rotational angle detecting device and torque detecting device of the present invention; and

FIG. 26 is a view showing still another example of the rotational member and targets of the rotational angle detecting device and torque detecting device of the present invention.

## DETAILED DESCRIPTION OF THE PREFERRED EMBODIMENTS

The following description will explain some embodiments of the present invention with reference to drawings.

Embodiment 1

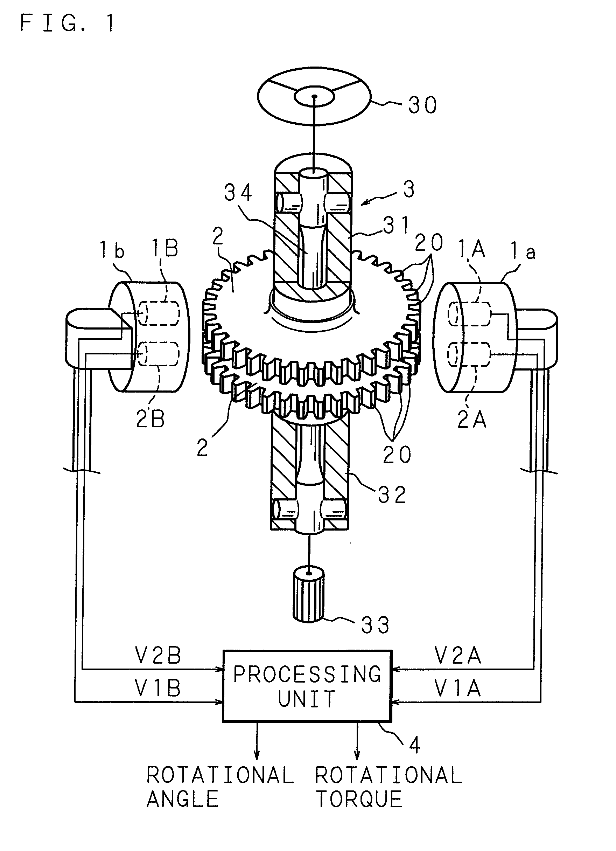

FIG. 1 is a schematic view showing the constructions of a rotational angle detecting device and a torque detecting device according to Embodiment 1 of the present invention, which are applied to a steering apparatus for an automobile. As shown in FIG. 1, an input shaft (a first shaft) 31 having an upper end portion connected to a steering wheel 30 and an output shaft (a second shaft) 32 having a lower end portion connected to a pinion 33 as a part of a steering mechanism, are coaxially connected to each other through a torsion bar (connecting shaft) 34 having a small diameter so as to construct a steering shaft 3 for connecting the steering wheel 30 and the steering mechanism. The rotational angle detecting device and the torque detecting device according to the present invention are constructed adjacent to a portion in which the input shaft 31 and the output shaft 32 are connected to each other. The constructions will now be described.

A disc-shape target plate (rotational member) 2 is coaxially fitted and secured on the input shaft 31 at a position adjacent to one end portion connected to the output shaft 32. The target plate 2 is formed in the form of a gear as shown in FIG. 1 so that the distance between the outer circumference 20 of the target plate 2 and the input shaft 31 changes with a rotation of the target plate 2.

A similar target plate 2 is fitted and secured on the output shaft 32 at a position adjacent to one end portion connected to the input shaft 31. The target plate 2 is formed in the form of a gear so that the distance between the outer circumference 20 of the target plate 2 and the output shaft 32 changes with a rotation of the target plate 2. The target plate 2 on the output shaft 32 side and the target plate 2 on the input shaft 31 side are arranged so that the positions of the teeth are aligned in the circumferential direction. The portions of the outer circumference 20 at which the teeth of the target plate 2 are formed will be hereinafter referred to as the "targets".

Two sensor boxes 1a and 1b are disposed outside of the target plates 2 so that the sensor boxes 1a and 1b face the targets 20 at different positions in the circumferential direction. The sensor boxes 1a and 1b are secured and supported by a stationary portion, such as a housing that supports the input shaft 31 and the output shaft 32. A magnetic sensor (detecting means) 1A facing the target 20 for the input shaft 31 and a magnetic sensor (detecting means) 2A facing the target 20 for the output shaft 32 are contained in the sensor box 1a so that their positions in the circumferential direction are accurately aligned with each other. Similarly, a magnetic sensor (detecting means) 1B facing the target 20 for the input shaft 31 and a magnetic sensor 2B (detecting means) facing the target 20 for the output shaft 32 are contained in the sensor box 1b so that their positions in the circumferential direction are accurately aligned with each other.

The magnetic sensors 1A, 2A, 1B and 2B are sensors, such as the magneto-resistance effect elements (MR elements), or hole elements having electric characteristics that change owing to an action of a magnetic field. The output voltage (detection signal) of each sensor changes according to change in the ambient magnetic field. The outputs of the magnetic sensors 1A, 2A, 1B and 2B are extracted to the outside of the sensor boxes 1a and 1b and supplied to a processing unit 4 comprising a microprocessor. Since the magnetic sensors 1A, 2A, 1B and 2B are used, targets made of magnetic material are used for the targets 20.

The targets 20 that the magnetic sensors 1A, 2A, 1B and 2B face are the outer circumferences of the target plates 2 in the gear form, and the distance from each of the magnetic sensors 1A, 2A, 1B and 2B changes with a rotation of each of the input shaft 31 and output shaft 32 as described above. Therefore, when the input shaft 31 and the output shaft 32 rotate about the axis, the distances between the targets 20 and the magnetic sensors 1A, 2A, 1B and 2B change periodically, and the magnetic sensors 1A, 2A, 1B and 2B output voltage signals (detection signals) in the form of sine waves or triangular waves according to the change in the rotational angles of the input shaft 31 and the output shaft 32 while the corresponding targets 20 are passing through the opposite positions.

At this time, the output voltages of the magnetic sensors 1A and 1B correspond to the rotational angle of the input shaft 31 having the corresponding targets 20. The output voltages of the magnetic sensors 2A and 2B correspond to the rotational angle of the output shaft 32 having the corresponding targets 20. Therefore, the rotational angle of the input shaft 31 can be calculated from the output voltages of the magnetic sensors 1A and 1B. The rotational angle of the output shaft 32 can be calculated from the output voltages of the magnetic sensors 2A and 2B.

The difference between the output voltage of the magnetic sensor 1A and that of the magnetic sensor 2A, or the difference between the output voltage of the magnetic sensor 1B and that of the magnetic sensor 2B, corresponds to the difference in the rotational angle (relative angular displacement) between the input shaft 31 and the output shaft 32. The relative angular displacement corresponds to a torsional angle generated in the torsion bar 34 for connecting the input shaft 31 and the output shaft 32 to each other, the torsional angle being generated owing to the rotational torque applied to the input shaft 31. Therefore, the rotational torque applied to the input shaft 31 can be calculated based on the difference between the output voltages.

In this embodiment, the targets 20 are provided for the input shaft 31 and the output shaft 32 that are connected to each other through the torsion bar 34 whose torsional characteristic has been known. When a rotating shaft having the known torsional characteristic is an object of detection, it is, of course, possible to directly provide targets 20 on positions apart from each other in the axial direction of the rotating shaft and detect the targets 20 by the magnetic sensors.

The rotational angle and the rotational torque are calculated by the processing unit 4 to which the output voltages of the magnetic sensors 1A, 2A, 1B and 2B are supplied. Since the procedures for the calculations are described in detail in Japanese Patent Application Laid-Open No. 2000-352502 (included in European Patent Publication No. 1087218A1), etc., filed by the applicant of this application, an explanation of the procedures is omitted here. In order to obtain accurate calculation results, the output characteristics of the magnetic sensors 1A and 1B for the input shaft 31 and of the magnetic sensors 2A and 2B for the output shaft 32 must be constant. Moreover, the same output voltages must be generated by the magnetic sensors in response to the passage of the corresponding targets 20.

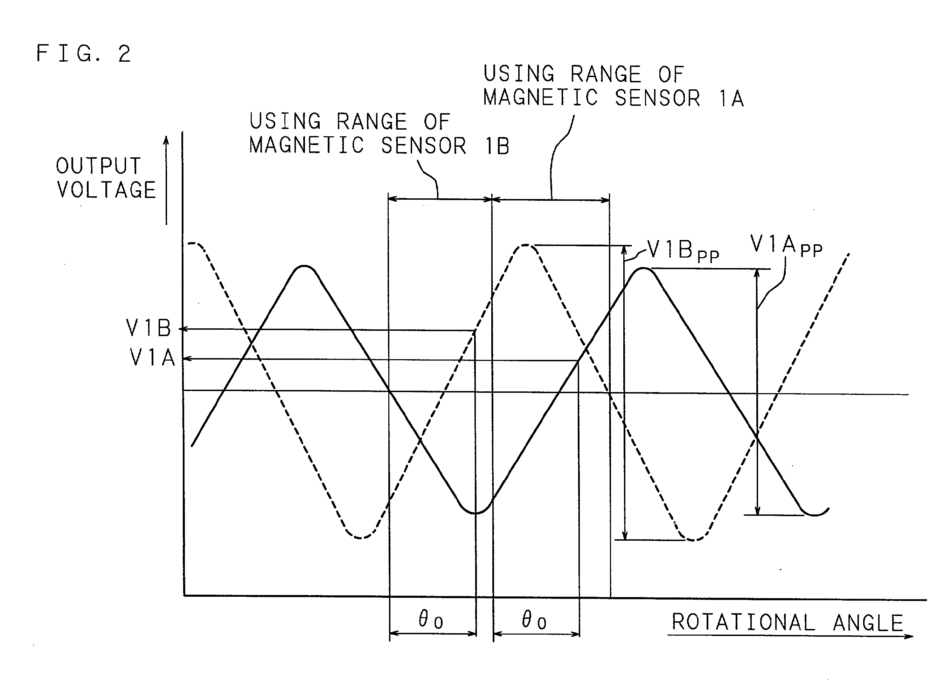

FIG. 2 is a graph showing an example of a state of change of the output voltages of the magnetic sensors 1A and 1B for the input shaft 31. The axis of abscissa of the graph stands for the rotational angle θ of the input shaft 31 that is an object of detection. A solid line in the graph indicates the output voltage of the magnetic sensor 1A, while a short dashed line indicates the output voltage of the magnetic sensor 1B. When the target plate 2 having an outer circumference on which the targets 20 are juxtaposed as described above is used, the output voltage of each of the magnetic sensors 1A and 1B has a sinusoidal waveform or a triangular waveform in which one period represents a rotation of the input shaft 31 by an amount corresponding to only one tooth.

The reason why the two magnetic sensors 1A and 1B are provided for the input shaft 31 is to prevent unreliable calculation of the rotational angle based on an uncertain output voltage that is obtained from a region near the peak (the maximum value or minimum value). The positions of the magnetic sensors 1A and 1B in the circumferential direction of the target plate 2 are adjusted such that the magnetic sensors 1A and 1B generate output voltages whose phases are shifted from each other as shown in FIG. 2. Thus, when either of the output voltages of the magnetic sensors 1A and 1B is present in the region near the peak, the other output voltage is present in a region other than the region near the peak. Therefore, by switching two magnetic sensors 1A and 1B under condition that each output voltage changes to a level higher (or lower) than a predetermined threshold voltage, for example, and by setting a using range for the output voltage of each of the magnetic sensors 1A and 1B as illustrated in FIG. 2, it is possible to calculate the rotational angle over the entire circumference, based on the output voltage in a region other than the region near the peak.

However, there is a difference in the state of change of the output voltages of the magnetic sensors 1A and 1B, according to the output characteristics of the magnetic sensors 1A and 1B. FIG. 2 shows a case where the output characteristics of the magnetic sensors 1A and 1B are considerably different from each other. The difference in the output characteristics appears as the difference in the gains of the output voltages as illustrated in FIG. 2. For example, if the rotational angle from the start point of each using range is identically $\theta_0$, output voltage V1A is obtained when the magnetic sensor 1A is used. On the other hand, output voltage V1B is obtained when the magnetic sensor 1B is used. Thus, the rotational angle that is calculated based on such output voltages varies according to whether or not the magnetic sensor 1A or the magnetic sensor 1B is used.

Moreover, the output characteristics of the magnetic sensors 1A and 1B change owing to the influence of the temperature, and also change with time. Therefore, the rotational angle calculated based on the output voltage of the same magnetic sensor (1A or 1B), include an error resulting from the influence of the ambient temperature and an error resulting from the passage of time. An error resulting from the difference in the output characteristic in calculating the rotational angle identically applies to the magnetic sensors 2A and 2B for the output shaft 32. As described above, the rotational torque calculated by using the difference in the output voltage between the magnetic sensors 1A and 2A or the difference in the output voltage between the magnetic sensors 1B and 2B also includes a similar error.

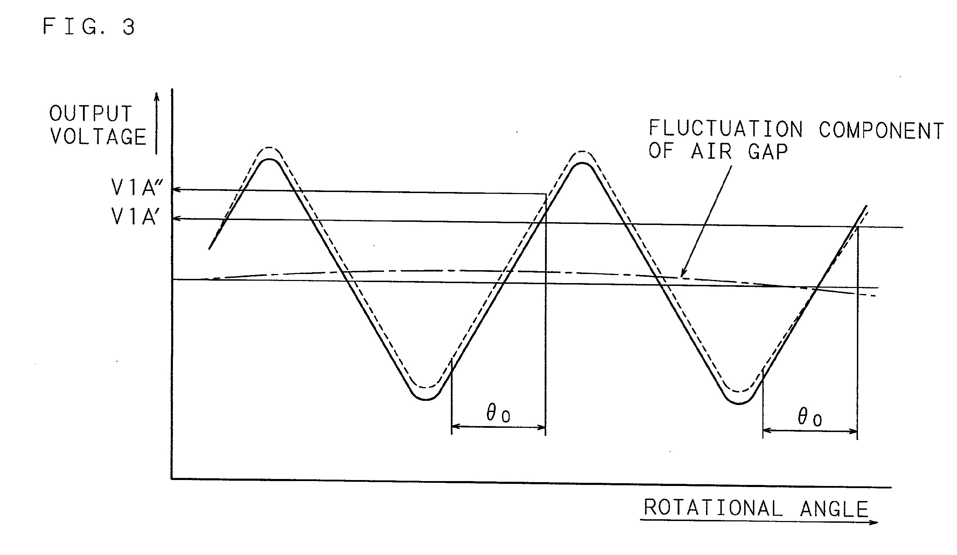

FIG. 3 is a graph showing another example of a state of change of the output voltage of one magnetic sensor (for example, the magnetic sensor 1A). As described above, the output voltage of the magnetic sensor 1A has a sinusoidal or triangular waveform in which one period represents a rotational angle corresponding to one tooth of the target 20.

As described above, the magnetic sensor 1A is secured and supported by the stationary portion. On the other hand, the targets 20 to be detected by the magnetic sensor 1A are juxtaposed on the outer circumference of the input shaft 31 that is freely rotatably supported. Therefore, if the concentricity between the portion to which the magnetic sensor 1A is secured and the input shaft 31 cannot satisfactorily be maintained, or if the input shaft 31 is staggered even though the concentricity is satisfactorily maintained, the air gap between the magnetic sensor 1A and each of the targets 20 changes during rotation.

In the event of occurrence of such a change in the air gap occurs, when the air gap is small, the output voltage of the magnetic sensor 1A is raised owing to approach of the target 20. On the contrary, when the air gap is large, the output voltage is lowered owing to movement away from the target 20. An alternate long and short dash line shown in FIG. 3 indicates a fluctuation component of the air gap. When such a fluctuation component is present, the actual output voltage of the magnetic sensor 1A exhibits a state of change as indicated by a short dashed line in FIG. 3 because of the superimposition of the fluctuation component on the original periodical change indicated by a solid line in FIG. 3. As a result, when the rotational angle from the start point of each using range is identically $\theta_0$, the obtainable output voltage varies in each period corresponding to each target 20 as indicated by V1A' and V1A" in FIG. 3. The accuracy of the rotational angle and the rotational torque calculated based on such output voltages deteriorates.

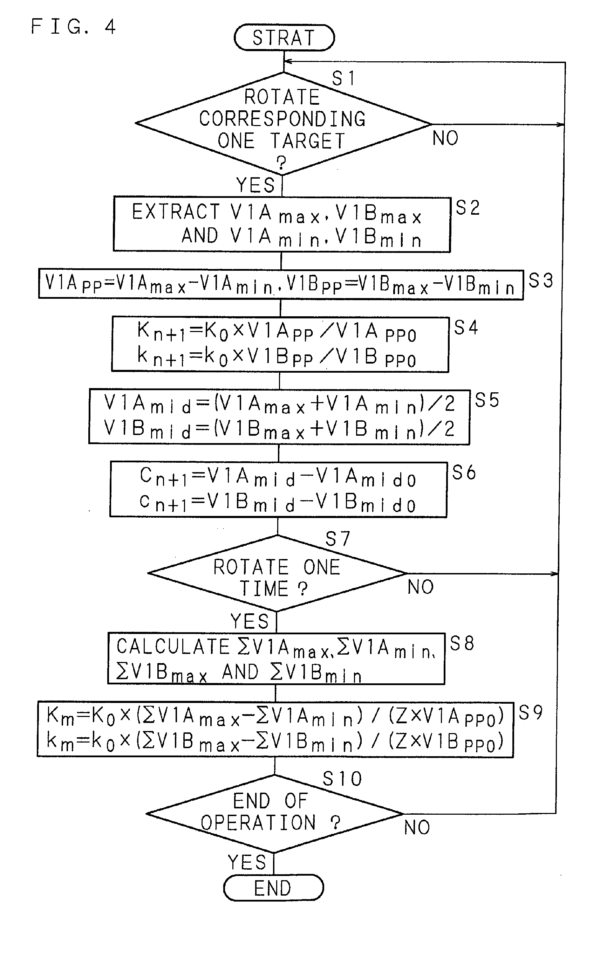

Therefore, when the processing unit 4 directly uses the output voltages of the magnetic sensors 1A, 2A, 1B and 2B to calculate the rotational angle and the rotational torque, the results of the calculations include an error resulting from the difference in the gains of the output characteristics of the magnetic sensors 1A, 2A, 1B and 2B and an error resulting from the change (offset) of the air gaps from the targets 20. The present invention is constructed to prevent occurrence of such errors by causing the processing unit 4 to perform the following gain correcting operation and offset correcting operation. FIG. 4 is a flow chart showing the contents of the gain and offset correcting operations.

The gain and offset correcting operations are performed as interruption processing for each of the magnetic sensors 1A, 2A, 1B and 2B, during the calculations of the rotational angle and the rotational torque. The following description will explain a correction procedure for each of the magnetic sensors 1A and 1B for detecting the input shaft 31.

The processing unit 4 monitors the output voltages of the magnetic sensors 1A and 1B sequentially fetched for the calculations of the rotational angle and the rotational torque. The processing unit 4 judges whether or not the input shaft 31 subjected to detection has rotated by an amount corresponding to one tooth of the target 20 (an amount corresponding to one target) (step S1). When it is judged that the input shaft 31 rotated by an amount corresponding to one target, the processing unit 4 extracts the maximum value $V1A_{max}$ and the minimum value $V1A_{min}$ of the output voltage V1A of the magnetic sensor 1A and the maximum value $V1B_{max}$ and the minimum value $V1B_{min}$ of the output voltage V1B of the magnetic sensor 1B during the rotation (S2). Then, the processing unit 4 calculates the differences $V1A_{PP}$ (= $V1A_{max}$ — $V1A_{min}$) and $V1B_{PP}$ (= $V1B_{max}$ — $V1B_{min}$) between the maximum and minimum values (S3).

Next, the processing unit 4 applies the obtained differences $V1A_{PP}$ and $V1B_{PP}$ to the following equations so as to calculate corrective gains $K_{n+1}$ and $k_{n+1}$ for the magnetic sensors 1A and 1B, respectively (S4).

$$K_{n+1} = K_0 \times V1A_{PP} / V1A_{PP0} \tag{1}$$

$$k_{n+1} = k_0 \times V1B_{PP} / V1B_{PP0} \tag{2}$$

In the equations, each of $V1A_{PP0}$ and $V1B_{PP0}$ is the difference (reference difference) between the maximum output voltage and minimum output voltage obtainable during an amount of rotation corresponding to one tooth of the target 20 when a magnetic sensor having a reference output characteristic is used, and $K_0$ and $k_0$ are reference gains set for the reference differences, respectively.

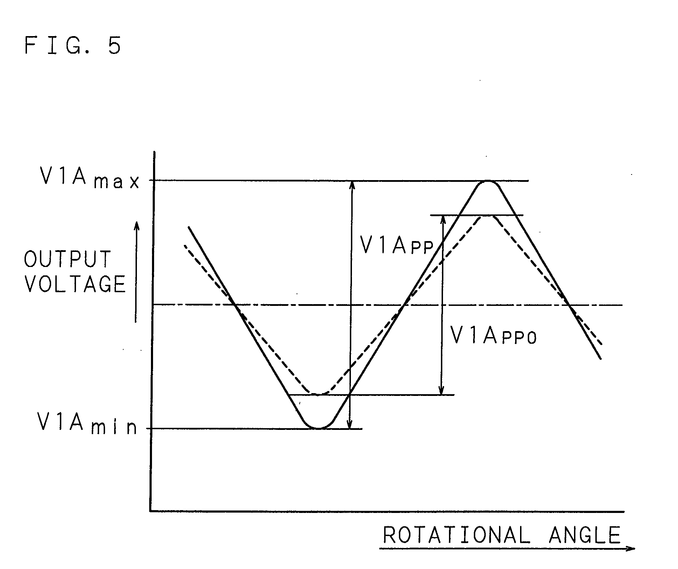

FIG. 5 is a graph explaining the corrective gain calculated as described above, and illustrates a state of change of the output voltage of the magnetic sensor 1A. A solid line in FIG. 5 indicates an actual output voltage of the magnetic sensor 1A. As described above, the output voltage is a sinusoidal or triangular waveform in which one period represents a rotational angle corresponding to one tooth of the target 20.

A short dashed line in FIG. 5 indicates a reference characteristic set for the magnetic sensor 1A. This characteristic is set such that the output voltage periodically changes within the reference difference $V1A_{PP0}$ in a similar periodic time. The reference gain $K_0$ is a gain corresponding to the reference difference of the reference characteristic. Therefore, a value given by multiplying the actual output voltage V1A obtained from the output characteristic indicated by the solid line at an appropriate rotational angle by the corrective gain $K_{n+1}$ given by the equation (1) becomes output voltage VA of the reference characteristic at the same rotational angle. Similarly, a value given by multiplying the output voltage V1B of the magnetic sensor 1B by the corrective gain $k_{n+1}$ given by the equation (2) becomes output voltage VB of the reference characteristic set for the magnetic sensor 1B.

In the calculation of the rotational angle performed by the processing unit 4, the output voltages V1A and V1B of the magnetic sensors 1A and 1B are not used as it is. In this case, by using the results of multiplying the output voltages V1A and V1B by the corrective gains $K_{n+1}$ and $k_{n+1}$ given by equations (1) and (2), the rotational angle can be always calculated based on the reference characteristic. Therefore, the influences of the difference in the output characteristics of the magnetic sensors 1A and 1B and the change in the output characteristics can be eliminated, and the rotational angle of the input shaft 31 as an object of detection can be accurately calculated. Further, the output voltages V2A and V2B of the magnetic sensors 2A and 2B that are used for the detection of the output shaft 32 are subjected to exactly the same gain correction. It is thus possible to improve the accuracy of the calculation of the rotational torque performed as described above.

Subscripts (n+1) provided for the corrective gains $K_{n+1}$ and $k_{n+1}$ indicate application to the output voltages V1A and V1B that are to be obtained during the next or n+1-th passage of the target (tooth) 20 after the present passage (n-th passage). The processing unit 4 calculates a corrective gain for use during the passage of the next target (tooth) 20 whenever one target (tooth) 20 passes.

As an alternative to the use of the differences $V1A_{PP}$ and $V1B_{PP}$ between the maximum and minimum values for the calculations of the corrective gains $K_{n+1}$ and $k_{n+1}$ as shown in the equations (1) and (2), the maximum values $V1A_{max}$ and $V1B_{max}$ or the minimum values $V1A_{min}$ and $V1B_{min}$ may be used as it is. In this case, the maximum and minimum values include error components owing to the influence of the fluctuating air gaps between the magnetic sensors 1A, 1B and the targets 20 during a rotation of the input shaft 31. It is therefore preferable to use the differences $V1A_{PP}$ and $V1B_{PP}$ for the calculations of the corrective gains $K_{n+1}$ and $k_{n+1}$.

After calculating the corrective gains $K_{n+1}$ and $k_{n+1}$ as described above, the processing unit 4 calculates an average value $V1A_{mid}$ ( = $(V1A_{max} + V1A_{min}) / 2$) of the output voltages of the magnetic sensor 1A and an average value $V1B_{mid}$ ( = $(V1B_{max} + V1B_{min}) / 2$) of the output voltages of the magnetic sensor 1B (S5). Then, the obtained average values are applied to the following equations so as to calculate offset amounts $C_{n+1}$ and $c_{n+1}$ for the magnetic sensors 1A and 1B, respectively (S6).

$$C_{n+1} = V1A_{mid} - V1A_{mid0} \tag{3}$$

$$c_{n+1} = V1B_{mid} - V1B_{mid0} \tag{4}$$

In these equations, each of $V1A_{mid0}$ and $V1B_{mid0}$ is an average value of the maximum output and the minimum output of the magnetic sensors 1A, 1B that are obtained during an amount of rotation corresponding to one tooth of the target 20 in a preferred state of use realized by eliminating fluctuation factors of the air gap, such as runout with respect to the target 20 and staggering of the input shaft 31.

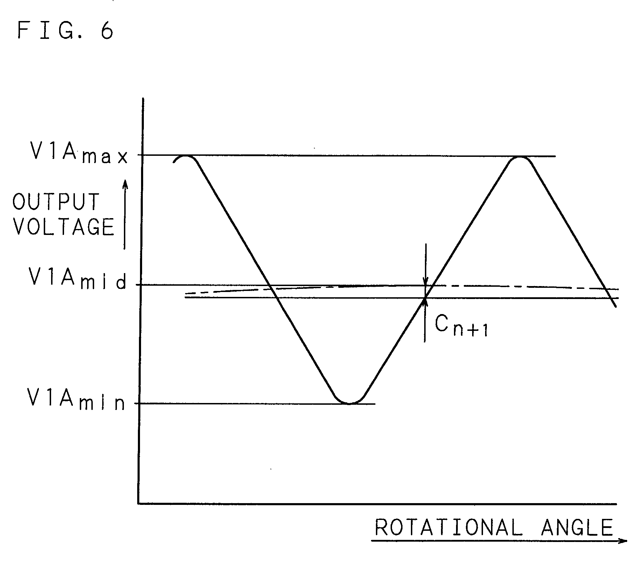

FIG. 6 is a graph explaining the calculated offset amount. In FIG. 6, a state of change of the output voltage of the magnetic sensor 1A is shown. The output voltage of the magnetic sensor 1A has a sinusoidal or triangular waveform between the maximum value $V1A_{max}$ and the minimum value $V1A_{min}$, in which one period represents a rotational angle corresponding to one tooth of the target 20. As described above, the output voltage sometimes includes an error component resulting from the change in the air gap between the magnetic sensor 1A and each of the targets 20.

A solid line in FIG. 6 indicates a state of change of an actual output voltage including such an error component. As indicated by an alternate long and short dash line, the output voltage has a midpoint varying in a moderate period according to the change in the air gap. The above-mentioned value $V1A_{mid}$ ( $= (V1A_{max} + V1A_{min}) / 2$) is a voltage level of the midpoint within the rotational angle corresponding to one tooth of the target 20. Note that $C_{n+1}$ calculated by the equation (3) is an offset amount from the proper midpoint indicated by a thin line in FIG. 6, that is, a preferred midpoint obtained by eliminating the influence of the change in the air gap. Therefore, by adding the offset amount $C_{n+1}$ to the actual output voltage V1A of the magnetic sensor 1A, it is possible to eliminate the fluctuation component of the air gap included in the output voltage V1A. Similarly, by adding the offset amount $c_{n+1}$ given by the equation (4) to the output voltage V1B of the magnetic sensor 1B, it is possible to eliminate the fluctuation component of the air gap in the output voltage V1B.

Instead of using the actual output voltages V1A and V1B of the magnetic sensors 1A and 1B as it is for the calculation of the rotational angle by the processing unit 4, if the results of the addition of the offset amounts $C_{n+1}$ and $c_{n+1}$ given by the equations (3) and (4) to the output voltages V1A and V1B are used, it is possible to eliminate the influence of the change in the output caused by the change in the air gap and accurately calculate the rotational angle of the input shaft 31 subjected to detection. Note that exactly the same offset corrections are performed for the output voltages V2A and V2B of the magnetic sensors 2A and 2B that are used for the detection of the output shaft 32. It is thus possible to improve the accuracy of the calculation of the rotational torque performed as described above.

Similarly to the corrective gains $K_{n+1}$ and $k_{n+1}$, subscripts (n+1) provided for the offset amounts $C_{n+1}$ and $c_{n+1}$ indicate application to the output voltages V1A and V1B that are to be obtained during the next or n+1-th passage of the target (tooth) 20 after the present passage (n-th passage). The processing unit 4 calculates an offset amount for use during the passage of the next target (tooth) 20 whenever one target (tooth) 20 passes.

As an alternative to the use of the average values $V1A_{mid}$ and $V1B_{mid}$ of the maximum and minimum values for the calculations of the offset amounts $C_{n+1}$ and $c_{n+1}$ as shown in the equations (3) and (4), the maximum values $V1A_{max}$ and $V1B_{max}$ or the minimum values $V1A_{min}$ and $V1B_{min}$ may be used as it is. In this case, however, the maximum and minimum values include error components owing to the influence of the change in the output characteristics of the magnetic sensors 1A and 1B as described above. Therefore, it is preferable to calculate the offset amounts $C_{n+1}$ and $c_{n+1}$ by using the average values $V1A_{mid}$ and $V1B_{mid}$.

The processing unit 4 repeats the operations in steps S1 through S6 until all of the targets (teeth) 20 juxtaposed on the surface of the input shaft 31 have passed, that is, the input shaft 31 has completely rotated once (S7). When the processing unit 4 judges that one rotation has been completed, cumulative values ($\Sigma V1A_{max}$, $\Sigma V1A_{min}$, $\Sigma V1B_{max}$ and $\Sigma V1B_{min}$) of the maximum values and the minimum values of the output voltages of the magnetic sensors 1A and 1B extracted during this rotation are calculated (S8). Then, average gains $K_m$ and $k_m$ during the one rotation are calculated by the following equations (S9). The above operations are repeated until a predetermined operation ending condition, such as shutdown of power supply, is satisfied (S10).

$$K_m = K_0 \times (\Sigma V1A_{max} - \Sigma V1A_{min}) / (Z \times V1A_{PP0}) \qquad (5)$$

$$k_m = k_0 \times (\Sigma V1B_{max} - \Sigma V1B_{min}) / (Z \times V1B_{PP0}) \qquad (6)$$

In these equations, Z is the number of the targets 20 juxtaposed (the number of teeth) on the circumference of the input shaft 31.

The calculated average gains $K_m$ and $k_m$ are average gains in the present detection atmosphere. These values are used as reference gains in calculating the corrective gains thereafter.

Embodiment 2

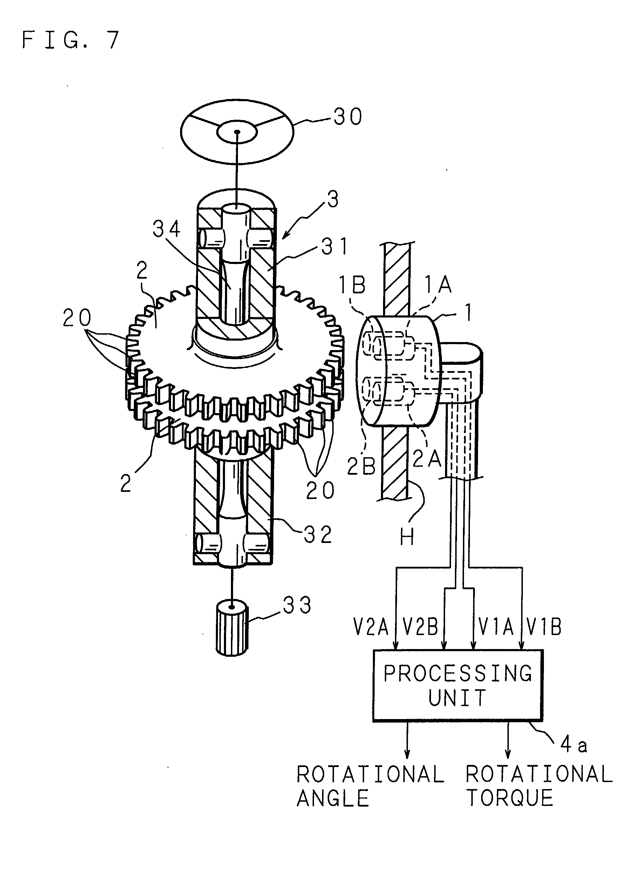

FIG. 7 is a schematic view showing the constructions of a rotational angle detecting device and a torque detecting device according to Embodiment 2 of the present invention, which are applied to a steering apparatus for an automobile. The rotational angle detecting device and torque detecting device comprise a sensor box 1 disposed at a stationary position outside of the target plates (rotational member) 2 to face the targets 20.

The sensor box 1 is secured and supported by a housing H (partly shown) that supports the input shaft (first shaft) 31 and the output shaft (second shaft) 32. Two magnetic sensors 1A and 1B (detecting means) facing the target 20 for the input shaft 31 and two magnetic sensors 2A and 2B (detecting means) facing the target 20 for the output shaft 32 are contained in the sensor box 1, so that the magnetic sensors 1A, 1B and the targets 20 facing them form a sensor unit for detecting the rotational angle of the input shaft 31, and the magnetic sensors 2A, 2B and the targets 20 facing them form a sensor unit for detecting the rotational angle of the output shaft 32.

The magnetic sensors 1A and 1B are disposed to face the targets 20 for the input shaft 31 so that the phases of the respective output voltages (detection signals) are shifted from each other, while the magnetic sensors 2A and 2B are disposed to face the targets 20 for the output shaft 32 so that the phases of the respective output voltages (detection signals) are shifted from each other. The magnetic sensors 1A and 2A are contained in the sensor box 1 so that their positions in the circumferential direction are accurately aligned with each other, while the magnetic sensors 1B and 2B are contained in the sensor box 1 so that their positions in the circumferential direction are accurately aligned with each other. Since other structures are the same as those of the rotational angle detecting device and torque detecting device illustrated in FIG. 1 of Embodiment 1, the same elements are designated with the same codes and an explanation thereof is omitted.

The following description will explain the operations of the rotational angle detecting device and torque detecting device having such structures.

The rotational angle detecting device and torque detecting device correct the output voltages of the magnetic sensors 1A, 1B, 2A and 2B and always detect the maximum value and minimum value of each output voltage for use in the correcting operation in the same manner as explained in Embodiment 1.

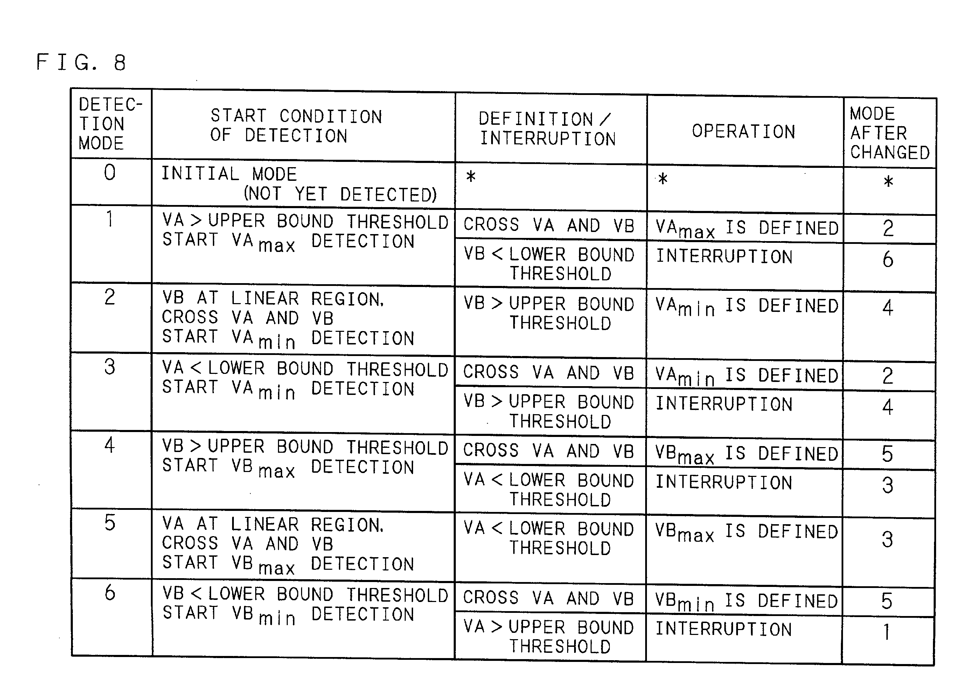

FIG. 8 is a table of detection mode 0 through mode 6 showing the conditions of detecting the maximum values $VA_{max}$, $VB_{max}$ and the minimum values $VA_{min}$, $VB_{min}$ of the output voltages of the magnetic sensors 1A, 1B, 2A and 2B. Note that since the conditions of detecting the maximum value and minimum value are common to the output voltages V1A and V1B of the magnetic sensors 1A and 1B for the input shaft 31 and the output voltages V2A and V2B of the magnetic sensors 2A and 2B for the output shaft 32, the output voltages are denoted as VA and VB.

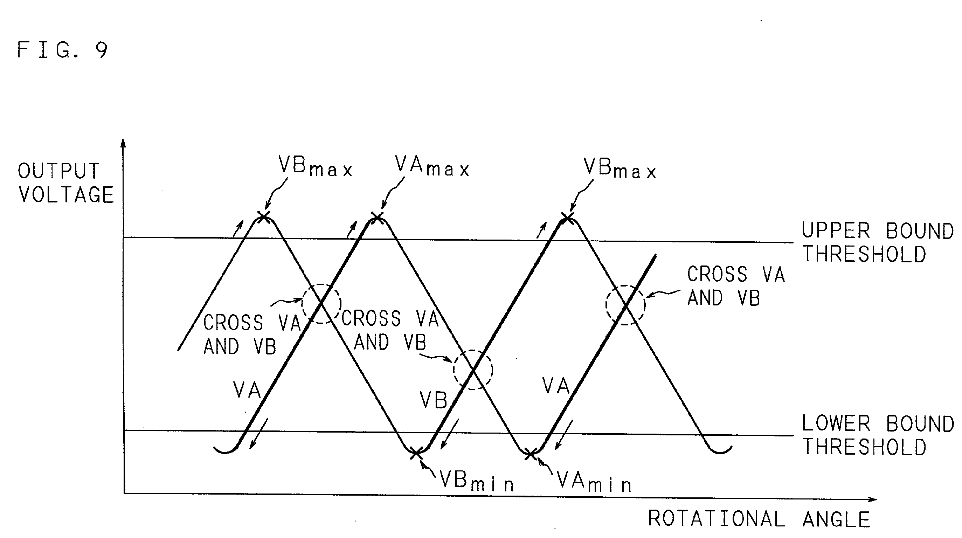

In this detection mode, in the waveform chart of the output voltages VA and VB shown in FIG. 9, a predetermined voltage level that is higher than a voltage level at which the waveforms of the output voltages VA and VB crossed each other but is lower than a maximum value obtainable by each of the output voltages VA and VB is set as an upper bound threshold, while a predetermined voltage level that is lower than a voltage level at which the waveforms of the output voltages VA and VB crossed each other but is higher than a minimum value obtainable by each of the output voltages VA and VB is set as a lower bound threshold.

Mode 0 is an initial mode in which none of the output voltages VA and VB exceed the upper bound threshold or the lower bound threshold.

Mode 1 is a condition in which the output voltage VA has exceeded the upper bound threshold. Thereafter, when the waveforms of the output voltages VA and VB have crossed each other, from the waveform chart of the output voltages VA and VB shown in FIG. 9, a maximum value obtained by the output voltage VA in this period is taken as a maximum value to be found, and the maximum value $VA_{max}$ is defined. Then, the detection mode is changed to later-described mode 2. After the output voltage VA exceeded the upper bound threshold, when the output voltage VB has become lower than the lower bound threshold, the detection is interrupted and the detection mode is changed to later-described mode 6.

Mode 2 is a condition in which the output voltage VB is in an increasing (rightward-rising) region in FIG. 9 and the waveforms of the output voltages VA and VB have crossed each other. Thereafter, when the output voltage VB has exceeded the upper bound threshold, a minimum value obtained by the output voltages VA in this period is taken as a minimum value to be found, and the minimum value $VA_{min}$ is defined. Then, the detection mode is changed to later-described mode 4.

Mode 3 is a condition in which the output voltage VA has become lower than the lower bound threshold. Thereafter, when the waveforms of the output voltages VA and VB have crossed each other, from the waveform chart of the output voltages VA and VB shown in FIG. 9, a minimum value taken by the output voltage VA in this period is taken as a minimum value to be found, and the minimum value $VA_{min}$ is defined. Then, the detection mode is changed to mode 2. After the output VA became lower than the lower bound threshold, when the output voltage VB has exceeded the upper bound threshold, the detection is interrupted and the detection mode is changed to later-described mode 4.

Mode 4 is a condition in which the output voltage VB has exceeded the upper bound threshold. Thereafter, when the waveforms of the output voltages VA and VB have crossed each other, from the waveform chart of the output voltages VA and VB shown in FIG. 9, a maximum value obtained by the output voltage VB in this period is taken as a maximum value to be found, and the maximum value $VB_{max}$ is defined. Then, the detection mode is changed to later-described mode 5. After the output VB exceeded the upper bound threshold, when the output voltage VA has become lower than the lower bound threshold, the detection is interrupted and the detection mode is changed to mode 3.

Mode 5 is a condition in which the output voltage VA is in an increasing (rightward-rising) region in FIG. 9 and the waveforms of the output voltages VA and VB have crossed each other. Thereafter, when the output voltage VA has become lower than the lower bound threshold, from the waveform chart of the output voltages VA and VB shown in FIG. 9, a maximum value obtained by the output voltages VB in this period is taken as a maximum value to be found, and the maximum value $VB_{max}$ is defined. Then, the detection mode is changed to mode 3.

Mode 6 is a condition in which the output voltage VB has become lower than the lower bound threshold. Thereafter, when the waveforms of the output voltages VA and VB have crossed each other, from the waveform chart of the output voltages VA and VB shown in FIG. 9, a minimum value obtained by the output voltage VB in this period is taken as a minimum value to be found, and the minimum value $VB_{min}$ is defined. Then, the detection mode is changed to mode 5. After the output VB became lower than the lower bound threshold, when the output voltage VA has exceeded the upper bound threshold, the detection is interrupted and the detection mode is changed to mode 1.

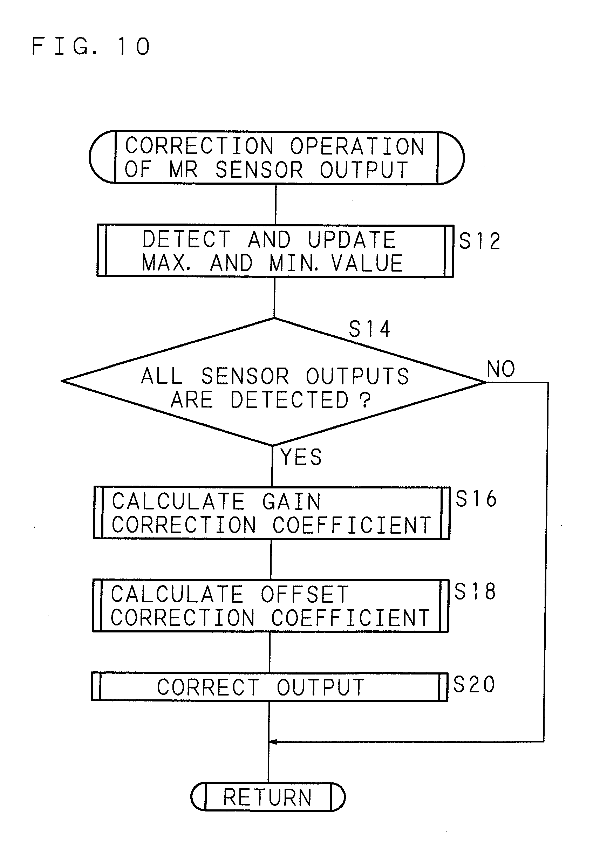

The following description will explain the operations of the rotational angle detecting device and torque detecting device, for correcting the output voltages of the magnetic sensors 1A, 1B, 2A and 2B by using the detection mode as described above, with reference to the flow charts of FIG. 10 through FIG. 19 showing the operations. Note that, as described above, the output voltages V1A and V1B of the magnetic sensors 1A and 1B and the output voltages V2A and V2B of the magnetic sensors 2A and 2B are denoted as the output voltages VA and VB, and the torque detecting device performs similar operations for the input shaft 31 and the output shaft 32.

First, the processing unit 4 of the rotational angle detecting device and torque detecting device detects and updates the maximum value and minimum value of each of the output voltages VA and VB (S12).

Next, the processing unit 4 judges whether or not the detection of the output voltages VA and VB of the two sensors has been completed (S14), and returns process if the detection has not been completed.

If the detection of the output voltages VA and VB of the two sensors has been completed (S14), the processing unit 4 calculates the gain correction coefficients explained in Embodiment 1 by using the maximum values and minimum values detected and updated in S12 (S16).

After calculating the gain correction coefficients (S16), the processing unit 4 calculates the offset correction coefficients as explained in Embodiment 1 by using the maximum values and minimum values detected and updated in S12 (S18). Then, the processing unit 4 corrects the detected output voltages VA and VB (S14) by using the calculated gain correction coefficients and offset correction coefficients (S20).

The rotational angle detecting device detects the rotational angle of the input shaft 31 or the output shaft 32 based on the corrected output voltages VA, VB (S20). The torque detecting device detects the torque applied to the input shaft 31, based on the detected rotational angles of the input shaft 31 and output shaft 32, and outputs the result.

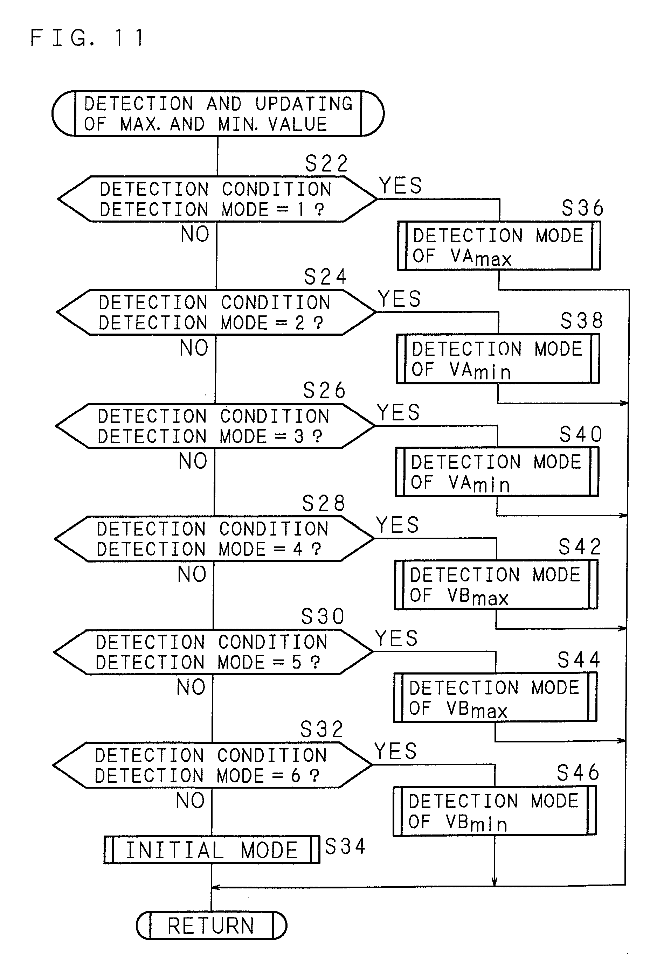

For the detection and updating of the maximum values and minimum values of the output voltages VA and VB (S12), the processing unit 4 judges whether or not the detection condition is mode 1 (FIG. 11, S22). If the detection condition is mode 1, the processing unit 4 enters in a mode for detecting the maximum value $VA_{max}$ of the output voltage VA and executes the operations of this mode (S36), and returns process.

If the detection condition is not mode 1 (S22), the processing unit 4 judges whether or not the detection condition is mode 2 (S24). If the detection condition is mode 2, the processing unit 4 enters in a mode for detecting the minimum value $VA_{min}$ of the output voltage VA and executes the operations of this mode (S38), and returns process.

If the detection condition is not mode 2 (S24), the processing unit 4 judges whether or not the detection condition is mode 3 (S26). If the detection condition is mode 3, the processing unit 4 enters in a mode for detecting the minimum value $VA_{min}$ of the output voltage VA and executes the operations of this mode (S40), and returns process.

If the detection condition is not mode 3 (S26), the processing unit 4 judges whether or not the detection condition is mode 4 (S28). If the detection condition is mode 4, the processing unit 4 enters in a mode for detecting the maximum value $VB_{max}$ of the output voltage VB and executes the operations of this mode (S42), and returns process.

If the detection condition is not mode 4 (S28), the processing unit 4 judges whether or not the detection condition is mode 5 (S30). If the detection condition is mode 5, the processing unit 4 enters in a mode for detecting the maximum value $VB_{max}$ of the output voltage VB and executes the operations of this mode (S44), and returns process.

If the detection condition is not mode 5 (S30), the processing unit 4 judges whether or not the detection condition is mode 6 (S32). If the detection condition is mode 6, the processing unit 4 enters in a mode for detecting the minimum value $VB_{min}$ of the output voltage VB and executes the operations of this mode (S46), and returns process.

If the detection condition is not mode 6 (S32), the processing unit 4 judges that the detection condition is the initial mode 0 and executes the operations of the initial mode (S34), and returns process.

(Mode 0)

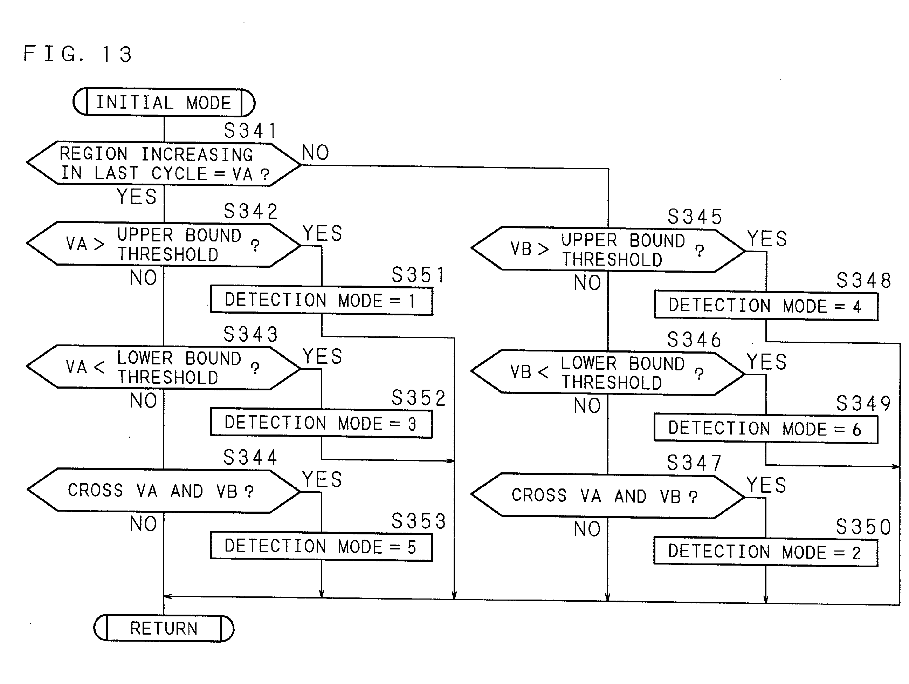

When the processing unit 4 has entered in the initial mode 0 (FIG. 11, S34), it judges which of the output voltages VA and VB sampled in the last cycle was in an increasing region shown by a thick line in FIG. 9 (FIG. 13, S341). If the output voltage VA was in the increasing region, the processing unit 4 judges whether or not the output voltage VA has exceeded the upper bound threshold (S342).

If the output voltage VA has not exceeded the upper bound threshold (S342), the processing unit 4 judges whether or not the output voltage VA has become lower than the lower bound threshold (S343). If the output voltage VA has not become lower than the lower bound threshold, the processing unit 4 judges whether or not the waveforms of the output voltages VA and VB have crossed each other (S344).

If the waveforms of the output voltages VA and VB have not crossed each other (S344), the processing unit 4 returns process immediately. On the other hand, if the waveforms of the output voltages VA and VB have crossed each other (S344), the processing unit 4 judges that the condition of detecting the maximum values and minimum values of the output voltages VA and VB is mode 5 (S353), and returns process.

If the output voltage VA has exceeded the upper bound threshold (S342), the processing unit 4 judges that the condition of detecting the maximum values and minimum values of the output voltages VA and VB is mode 1 (S351), and returns process.

If the output voltage VA has become lower than the lower bound threshold (S343), the processing unit 4 judges that the condition of detecting the maximum values and minimum values of the output voltages VA and VB is mode 3 (S352), and returns process.

In the output voltages VA and VB sampled in the last cycle, if the output voltage VA was not in an increasing region (S341), the processing unit 4 judges whether or not the output voltage VB has exceeded the upper bound threshold (S345).

If the output voltage VB has not exceeded the upper bound threshold (S345), the processing unit 4 judges whether or not the output voltage VB has become lower than the lower bound threshold (S346). If the output voltage VB has not become lower than the lower bound threshold, the processing unit 4 judges whether or not the waveforms of the output voltages VA and VB have crossed each other (S347).

If the waveforms of the output voltages VA and VB have not crossed each other (S347), the processing unit 4 returns process immediately. On the other hand, if the waveforms of the output voltages VA and VB have crossed each other (S347), the processing unit 4 judges that the condition of detecting the maximum values and minimum values of the output voltages VA and VB is mode 2 (S350), and returns process.

If the output voltage VB has exceeded the upper bound threshold (S345), the processing unit 4 judges that the condition of detecting the maximum values and minimum values of the output voltages VA and VB is mode 4 (S348), and returns process.

If the output voltage VB has become lower than the lower bound threshold (S346), the processing unit 4 judges that the condition of detecting the maximum values and minimum values of the output voltages VA and VB is mode 6 (S349), and returns process.

(Mode 1)

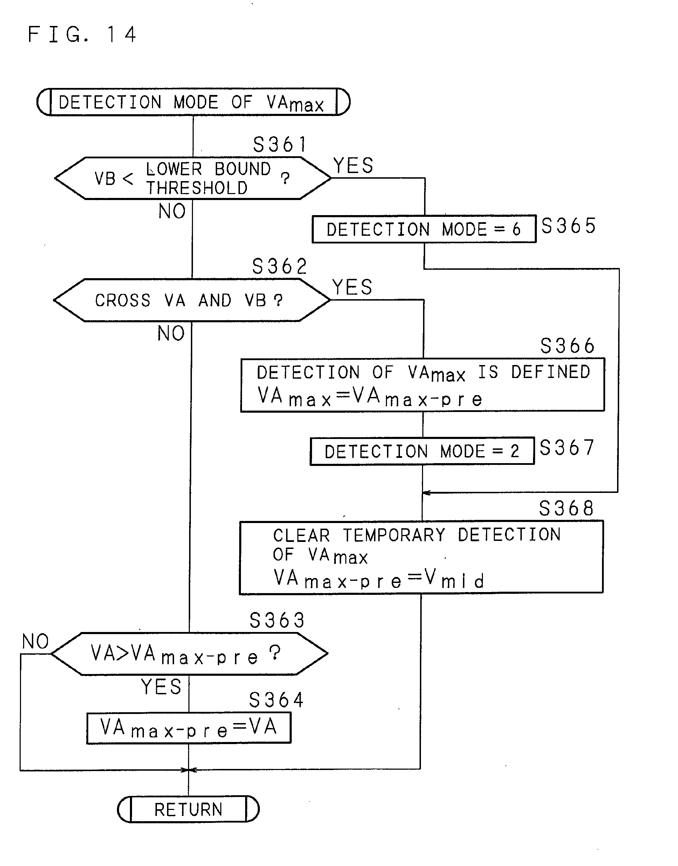

When the processing unit 4 has entered in mode 1 for detecting the maximum value $VA_{max}$ of the output voltage VA (FIG. 11, S36), it judges whether or not the output voltage VB has become lower than the lower bound threshold (FIG. 14, S361). If the output voltage VB has not become lower than the lower bound threshold, the processing unit 4 judges whether or not the waveforms of the output voltages VA and VB have crossed each other (S362).

If the waveforms of the output voltages VA and VB have not crossed each other (S362), the processing unit 4 judges whether or not the output voltage VA has exceeded a temporary maximum value $VA_{max-pre}$ of the output voltage VA after entering in this mode for detecting the maximum value $VA_{max}$ (S363).

If the output voltage VA has exceeded the temporary maximum value $VA_{max-pre}$ (S363), the processing unit 4 sets the output voltage VA as a new temporary maximum value $VA_{max-pre}$ (S364), and returns process. If the output voltage VA has not exceeded the temporary maximum value $VA_{max-pre}$ (S363), the processing unit 4 returns process immediately.

If the waveforms of the output voltages VA and VB have crossed each other (S362), the processing unit 4 defines the temporary maximum value $VA_{max-pre}$ of the output voltage VA after entering in this mode for detecting the maximum value $VA_{max}$, as the maximum value $VA_{max}$ of the output voltage VA (S366). Then, the processing unit 4 judges that the condition of detecting the maximum values and minimum values of the output voltages VA and VB is mode 2 (S367), clears mode 1 for detecting the maximum value $VA_{max}$ and sets the temporary maximum value $VA_{max-pre}$ as the midpoint voltage $V_{mid}$ of the output voltages (S368), and returns process.

If the output voltage VB has become lower than the lower bound threshold (S361), the processing unit 4 judges that the condition of detecting the maximum values and minimum values of the output voltages VA and VB is mode 6 (S365), clears mode 1 for detecting the maximum value $VA_{max}$ and sets the temporary maximum value $VA_{max-pre}$ as the midpoint voltage Vmid of the output voltages (S368), and returns process.

(Mode 2)

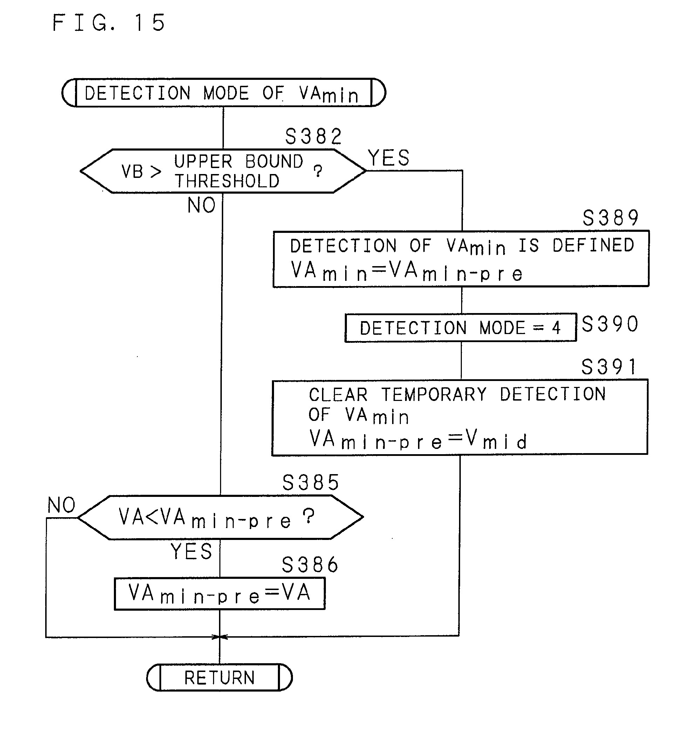

When the processing unit 4 has entered in mode 2 for detecting the minimum value $VA_{min}$ of the output voltage VA (FIG. 11, S38), it judges whether or not the output voltage VB has exceeded the upper bound threshold (FIG. 15, S382).

If the output voltage VB has not exceeded the upper bound threshold (S382), the processing unit 4 judges whether or not the output voltage VA has become lower than a temporary minimum value $VA_{min-pre}$ of the output voltage VA after entering in this mode for detecting the minimum value $VA_{min}$ (S385).

If the output voltage VA has become lower than the temporary minimum value $VA_{min-pre}$ (S385), the processing unit 4 sets the output voltage VA as a new temporary minimum value $VA_{min-pre}$ (S386), and returns process. If the output voltage VA has not become lower than the temporary minimum value $VA_{min-pre}$ (S385), the processing unit 4 returns process immediately.

If the output voltage VB has exceeded the upper bound threshold (S382), the processing unit 4 defines the temporary minimum value $VA_{min-pre}$ of the output voltage VA after entering in this mode for detecting the minimum value $VA_{min}$, as the minimum value $VA_{min}$ of the output voltage VA (S389). Then, the processing unit 4 judges that the condition of detecting the maximum values and minimum values of the output voltages VA and VB is mode 4 (S390), clears the mode for detecting the minimum value $VA_{min}$ and sets the temporary minimum value $VA_{min-pre}$ as the midpoint voltage $V_{mid}$ of the output voltages (S391), and returns process.

(Mode 3)

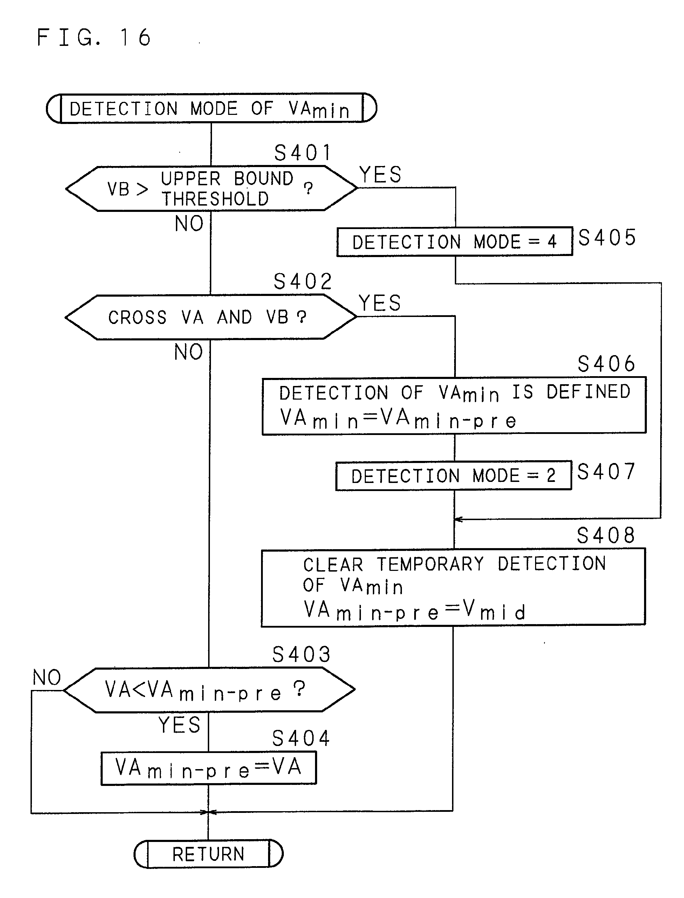

When the processing unit 4 has entered in mode 3 for detecting the minimum value $VA_{min}$ of the output voltage VA (FIG. 11, S40), it judges whether or not the output voltage VB has exceeded the upper bound threshold (FIG. 16, S401). If the output voltage VB has not exceeded the upper bound threshold, the processing unit 4 judges whether or not the waveforms of the output voltages VA and VB have crossed each other (S402).

If the waveforms of the output voltages VA and VB have not crossed each other (S402), the processing unit 4 judges whether or not the output voltage VA has become lower than a temporary minimum value $VA_{min-pre}$ of the output voltage VA after entering in this mode for detecting the minimum value $VA_{min}$ (S403).

If the output voltage VA has become lower than the temporary minimum value $VA_{min-pre}$ (S403), the processing unit 4 sets the output voltage VA as a new temporary minimum value $VA_{min-pre}$ (S404), and returns process. If the output voltage VA has not become lower than the temporary minimum value $VA_{min-pre}$ (S403), the processing unit 4 returns process immediately.

If the waveforms of the output voltages VA and VB have crossed each other (S402), the processing unit 4 defines the temporary minimum value $VA_{min-pre}$ of the output voltage VA after entering in this mode for detecting the minimum value $VA_{min}$, as the minimum value $VA_{min}$ of the output voltage VA (S406). Then, the processing unit 4 judges that the condition of detecting the maximum values and minimum values of the output voltages VA and VB is mode 2 (S407), clears mode 3 for detecting the minimum value $VA_{min}$ and sets the temporary minimum value $VA_{min-pre}$ as the midpoint voltage $V_{mid}$ of the output voltages (S408), and returns process.

If the output voltage VB has exceeded the upper bound threshold (S401), the processing unit 4 judges that the condition of detecting the maximum values and minimum values of the output voltages VA and VB is mode 4 (S405), clears mode 3 for detecting the minimum value $VA_{min}$ and sets the temporary minimum value $VA_{min-pre}$ as the midpoint voltage $V_{mid}$ of the output voltages (S408), and returns process.

(Mode 4)

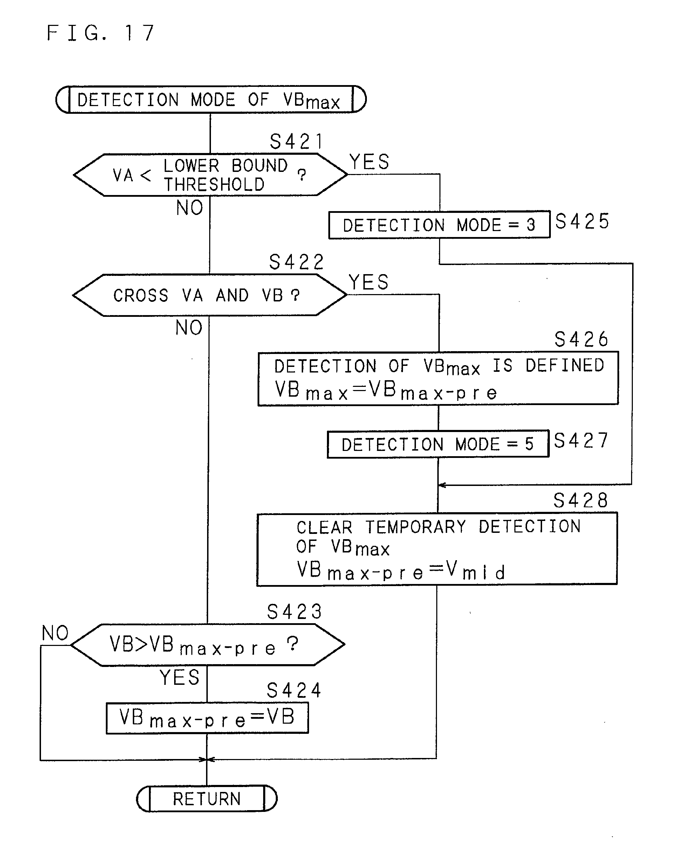

When the processing unit 4 has entered in mode 4 for detecting the maximum value $VB_{max}$ of the output voltage VB (FIG. 11, S42), it judges whether or not the output voltage VA has become lower than the lower bound threshold (FIG. 17, S421). If the output voltage VA has not become lower than the lower bound threshold, the processing unit 4 judges whether or not the waveforms of the output voltages VA and VB have crossed each other (S422).

If the waveforms of the output voltages VA and VB have not crossed each other (S422), the processing unit 4 judges whether or not the output voltage VB has exceeded a temporary maximum value $VB_{max-pre}$ of the output voltage VB after entering in this mode for detecting the maximum value $VB_{max}$ (S423).

If the output voltage VB has exceeded the temporary maximum value $VB_{max-pre}$ (S423), the processing unit 4 sets the output voltage VB as a new temporary maximum value $VB_{max-pre}$ (S424), and returns process. If the output voltage VB has not exceed the temporary maximum $VB_{max-pre}$ (S423), the processing unit 4 returns process immediately.

If the waveforms of the output voltages VA and VB have crossed each other (S422), the processing unit 4 defines the temporary maximum value $VB_{max-pre}$ of the output voltage VB after entering in this mode for detecting the

maximum value $VB_{max}$, as the maximum value $VB_{max}$ of the output voltage VB (S426). Then, the processing unit 4 judges that the condition of detecting the maximum values and minimum values of the output voltages VA and VB is mode 5 (S427), clears mode 4 for detecting the maximum value $VB_{max}$ and sets the temporary maximum value $VB_{max-pre}$ as the midpoint voltage $V_{mid}$ of the output voltages (S428), and returns process.

If the output voltage VA has become lower than the lower bound threshold (S421), the processing unit 4 judges that the condition of detecting the maximum values and minimum values of the output voltages VA and VB is mode 3 (S425), clears mode 4 for detecting the maximum value $VB_{max}$ and sets the temporary maximum value $VB_{max-pre}$ as the midpoint voltage $V_{mid}$ of the output voltages (S428), and returns process.

(Mode 5)

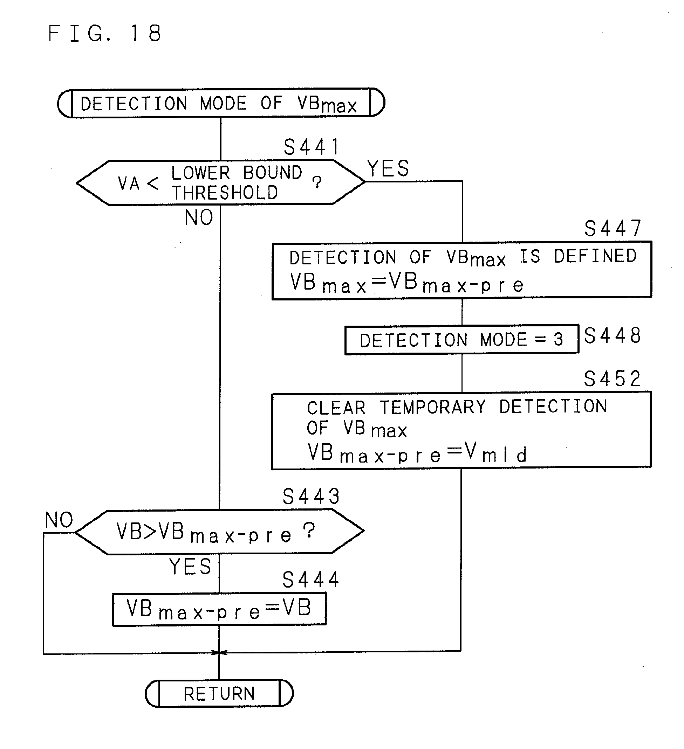

When the processing unit 4 has entered in mode 5 for detecting the maximum value $VB_{max}$ of the output voltage VB (FIG. 11, S44), it judges whether or not the output voltage VA has become lower than the lower bound threshold (FIG. 18, S441).

If the output voltage VA has not become lower than the lower bound threshold (S441), the processing unit 4 judges whether or not the output voltage VB has exceeded a temporary maximum value $VB_{max-pre}$ of the output voltage VB after entering in this mode for detecting the maximum value $VB_{max}$ (S443).

If the output voltage VB has exceeded the temporary maximum value $VB_{max-pre}$ (S443), the processing unit 4 sets the output voltage VB as a new temporary maximum value $VB_{max-pre}$ (S444). If the output voltage VB has not exceeded the temporary maximum value $VB_{max-pre}$ (S443), the processing unit 4 returns process immediately.

If the output voltage VA has become lower than the lower bound threshold (S441), the processing unit 4 defines the temporary maximum value $VB_{max-pre}$ of the output voltage VB after entering in this mode for detecting the maximum value $VB_{max}$ and minimum value $VB_{min}$ as the maximum value $VB_{max}$ of the output voltage VB (S447). Then, the processing unit 4 judges that the condition of detecting the maximum values and minimum values of the output voltages VA and VB is mode 3 (S448), clears the mode for detecting the maximum value $VB_{max}$ and sets the temporary maximum value $VB_{max-pre}$ as the midpoint voltage $V_{mid}$ of the output voltages (S452), and returns process.

(Mode 6)

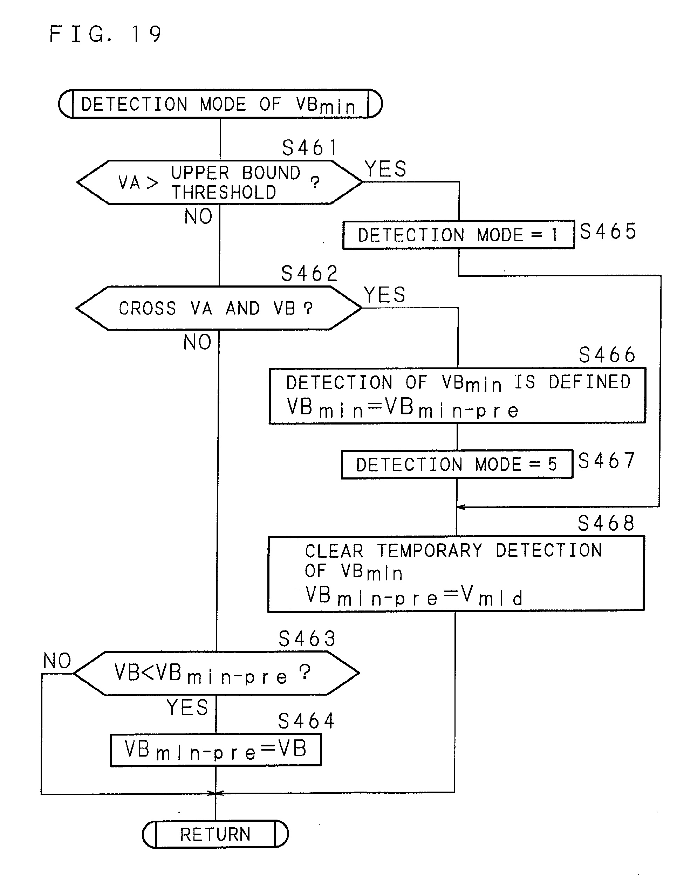

When the processing unit 4 has entered in mode 6 for detecting the minimum value $VB_{min}$ of the output voltage VB (FIG. 11, S46), it judges whether or not the output voltage VA has exceeded the upper bound threshold (FIG. 19, S461). If the output voltage VA has not exceeded the upper bound threshold, the processing unit 4 judges whether or not the waveforms of the output voltages VA and VB have crossed each other (S462).

If the waveforms of the output voltages VA and VB have not crossed each other (S462), the processing unit 4 judges whether or not the output voltage VB has become lower than a temporary minimum value $VB_{min-pre}$ of the output voltage VB after entering in this mode for detecting the minimum value $VB_{min}$ (S463).

If the output voltage VB has become lower than the temporary minimum value $VB_{min-pre}$ (S463), the processing unit 4 sets the output voltage VB as a new temporary minimum value $VB_{min-pre}$ (S464), and returns process. If the output voltage VB has not become lower than the temporary minimum value $VB_{min-pre}$ (S463), the processing unit 4 returns process immediately.

If the waveforms of the output voltages VA and VB have crossed each other (S462), the processing unit 4 defines the temporary minimum value $VB_{min-pre}$ of the output voltage VB after entering in this mode for detecting the minimum value $VB_{min}$ as the minimum value $VB_{min}$ of the output voltage VB (S466). Then, the processing unit 4 judges that the condition of detecting the maximum values and minimum values of the output voltages VA and VB is mode 5 (S467), clears mode 6 for detecting the minimum value $VB_{min}$ and sets the temporary maximum value $VB_{min-pre}$ as the midpoint voltage $V_{mid}$ of the output voltages (S468), and returns process.

If the output voltage VA has exceeded the upper bound threshold (S461), the processing unit 4 judges that the condition of detecting the maximum values and minimum values of the output voltages VA and VB is mode 1 (S465), clears mode 6 for detecting the minimum value $VB_{min}$ and sets the temporary maximum value $VB_{min-pre}$ as the midpoint voltage $V_{mid}$ of the output voltages (S468), and returns process.

(Output Voltage Correction)

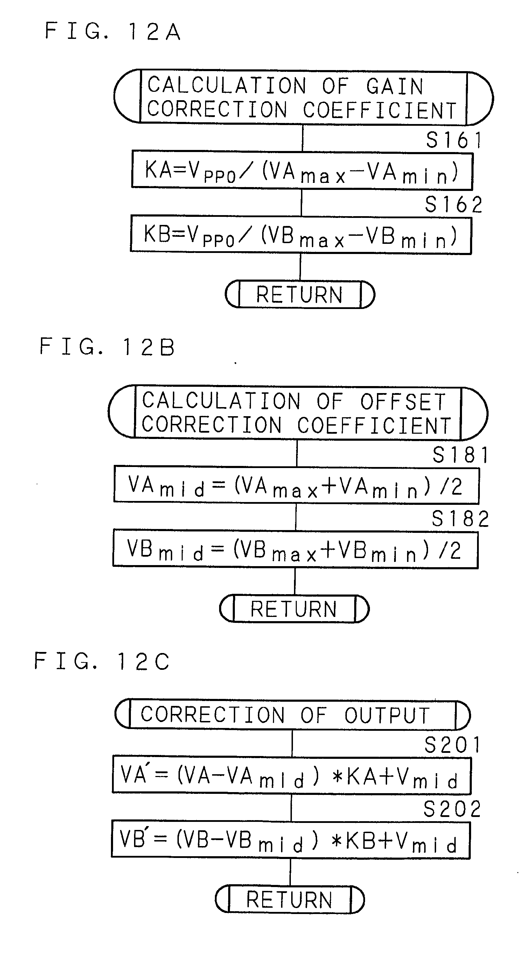

In the step of calculating a gain correction coefficient (FIG. 10, S16), the processing unit 4 calculates a gain correction coefficient $KA = V_{PP0} / (VA_{max} — VA_{min})$ for the magnetic sensors 1A and 2A (FIG. 12A, S161) by using the maximum value $VA_{max}$ and the minimum value $VA_{min}$ of the output voltage VA detected by any one of the above-described mode 1 through mode 6 and the difference (reference difference) $V_{PP0}$ between the maximum output voltage and the minimum output voltage which were obtained during an amount of rotation corresponding to one tooth of the target 20 by the use of a magnetic sensor having a reference output characteristic. The processing unit 4 also calculates a gain correction coefficient $KB = V_{PP0} / (VB_{max} - VB_{min})$ for the magnetic sensors 1B and 2B (S162) by using the maximum value $VB_{max}$ and the minimum value $VB_{min}$ of the output voltage VB detected by any one of the above-described mode 1 through mode 6 and the reference difference $V_{PP0}$.

In the step of calculating an offset correction coefficient (FIG. 10, S18), the processing unit 4 calculates an offset correction coefficient $VA_{mid} = (VA_{max} + VA_{min}) / 2$ for the magnetic sensors 1A and 2A (FIG. 12B, S181) by using the maximum value $VA_{max}$ and the minimum value $VA_{min}$ of the output voltage VA detected by any one of the above-described mode 1 through mode 6, and calculates an offset correction coefficient $VB_{mid} = (VB_{max} + VB_{min}) / 2$ for the magnetic sensors 1B and 2B (S182) by using the maximum value $VB_{max}$ and the minimum value $VB_{min}$ of the output voltage VB detected by any one of the above-described mode 1 through mode 6.

In the step (FIG. 10, S20) of correcting the detected output voltages VA and VB of the magnetic sensors 1A, 2A, 1B and 2B (FIG. 10, S14), the processing unit 4 calculates and corrects an output voltage $VA' = (VA - VA_{mid}) \times KA + V_{mid}$ (FIG. 12C, S201) by using the calculated gain correction coefficient KA (FIG. 12A, S161) and the calculated offset correction coefficient $VA_{mid}$ (FIG. 12B, S181), and calculates and corrects an output voltage $VB' = (VB - VB_{mid}) \times KB + V_{mid}$ (FIG. 12C, S202) by using the calculated gain correction coefficient KB (FIG. 12A, S162) and the calculated offset correction coefficient $VB_{mid}$ (FIG. 12B, S182).


Embodiment 3

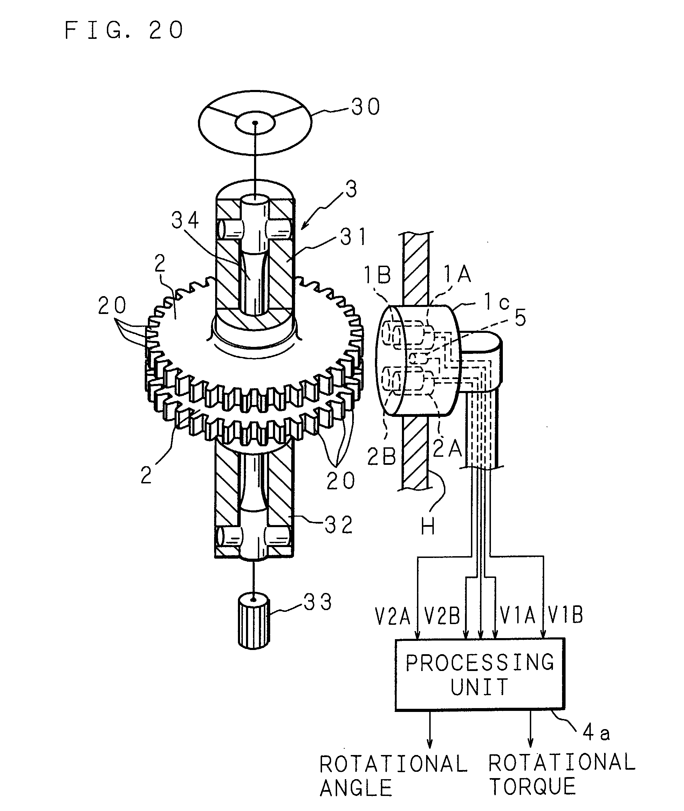

FIG. 20 is a schematic view showing the constructions of a rotational angle detecting device and a torque detecting device according to Embodiment 3 of the present invention, which are applied to a steering apparatus for an automobile. The rotational angle detecting device and torque detecting device comprise a sensor box 1c disposed at a stationary position outside of the target plates (rotational members) 2 to face the targets 20.

The sensor box 1c is secured and supported by a housing H (partly shown) that supports the input shaft (first shaft) 31 and the output shaft (second shaft) 32. Two magnetic sensors (detecting means) 1A and 1B facing the target 20 for the input shaft 31 and two magnetic sensors (detecting means) 2A and 2B facing the target 20 for the output shaft 32 are contained in the sensor box 1c, so that the magnetic sensors 1A, 1B and the target 20 facing the magnetic sensors 1A, 1B constitute a sensor unit for detecting the rotational angle of the input shaft 31, and the magnetic sensors 2A, 2B and the target 20 facing the magnetic sensors 2A, 2B constitute a sensor unit for detecting the rotational angle of the output shaft 32.

The outputs of the magnetic sensors 1A, 2A, 1B and 2B are extracted to the outside of the sensor box 1c and supplied to a processing unit 4a comprising a microprocessor.

Moreover, the sensor box 1c contains therein a temperature detector (temperature detecting means) 5 for detecting the temperature of the magnetic sensors 1A, 1B, 2A and 2B. The temperature detected by the temperature detector 5 is supplied to the processing unit 4a.

The magnetic sensors 1A and 1B are positioned to face the target 20 for the input shaft 31 so that the phases of their output voltages (detection signals) are shifted from each other, while the magnetic sensors 2A and 2B are positioned to face the target 20 for the output shaft 32 so that the phases of their output voltages are shifted from each other. The magnetic sensor 1A and the magnetic sensor 2A are contained in the sensor box 1c so that their positions in the circumferential direction are accurately aligned with each other. The magnetic sensor 1B and the magnetic sensor 2B are contained in the sensor box 1c so that their positions in the circumferential direction are accurately aligned with each other. Since other structures are the same as those of the rotational angle detecting device and torque detecting device explained in Embodiment 1, the same elements are designated with the same reference numerals and an explanation thereof is omitted.

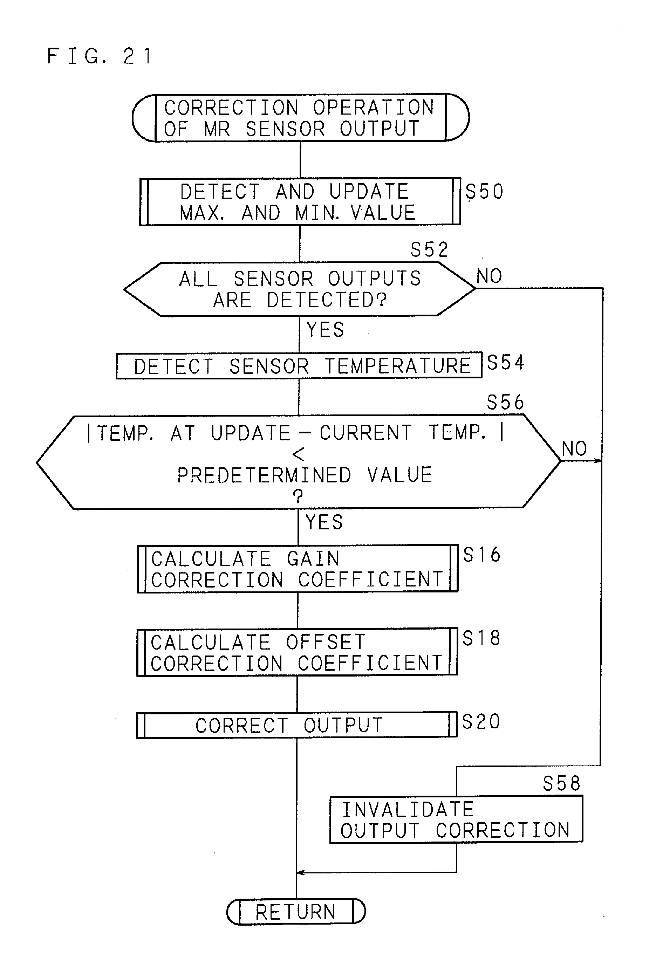

The following description will explain the operations of the rotational angle detecting device and torque detecting device having such structures, with reference to the flow charts of FIG. 21 through FIG. 24 showing the operations.

First, the processing unit 4a of the rotational angle detecting device and torque detecting device detects and updates the maximum value and minimum value of each of the output voltages V1A, V1B, V2A, V2B of the magnetic sensors 1A, 1B, 2A and 2B (S50).

Next, the processing unit 4a judges whether or not the detection of the output voltages V1A, V1B, V2A, V2B of the magnetic sensors 1A, 1B, 2A and 2B has been completed (S52). If the detection has been completed, the processing unit 4a reads the temperature detected by the temperature detector 5 (S54).

The processing unit 4a calculates the difference between the read temperature (S54) and a temperature (to be described later) which was detected by the temperature detector 5 and read when the maximum value and minimum value of each of the output voltages V1A, V1B, V2A, V2B were detected and updated (S50), and judges whether or not the absolute value of the difference exceeds a predetermined value (S56).

If the absolute value of the difference does not exceed the predetermined value (S56), the processing unit

**EP 1 293 752 A1**

4a calculates the gain correction coefficients explained in Embodiment 1 (S16) by using the detected and updated maximum and minimum values (S50).

After calculating the gain correction coefficients (S16), the processing unit 4a calculates the offset correction coefficients explained in Embodiment 1 (S18) by using the detected and updated maximum and minimum values (S50), and then corrects the detected output voltages V1A, V1B, V2A and V2B (S52) by using the calculated gain correction coefficients and offset correction coefficients (S20).

The rotational angle detecting device detects the rotational angle of the input shaft 31 or the output shaft 32 based on the corrected output voltages V1A, V1B, V2A and V2B (S20). The torque detecting device detects the torque applied to the input shaft 31, based on the detected rotational angles of the input shaft 31 and output shaft 32, and outputs the result.

If the detection of the output voltages V1A, V1B, V2A and V2B of the magnetic sensors 1A, 1B, 2A and 2B has not been completed (S52), or if the absolute value of the difference exceeds the predetermined value (S56), the processing units 4a invalidates the operations executed up to this point for correcting the output voltages V1A, V1B, V2A and V2B (S58), and returns process.

Here, for the detection and updating of the maximum value and minimum value of each of the output voltages V1A, V1B, V2A and V2B of the magnetic sensors 1A, 1B, 2A and 2B (S50), the processing unit 4a detects and updates the maximum value and minimum value of each of the output voltages V1A, V1B, V2A, V2B of the magnetic sensors 1A, 1B, 2A and 2B as explained in Embodiment 2 (FIG. 10, S12), and rewrites the detection condition flag of each of the output voltages when the maximum value or the minimum value was detected.

The processing unit 4a has two flags, namely the flag IN indicating the detection conditions of the magnetic sensors 1A and 1B for the input shaft 31 and the flag OUT indicating the detection conditions of the magnetic sensors 2A and 2B for the output shaft 32. Each flag is zero in the initial state (clear state).

Whenever the maximum value or the minimum value of each of the output voltages was detected, the flags IN and OUT become such that

maximum value $V1A_{max}$: IN = 1,
minimum value $V1A_{min}$: IN = 2,
maximum value $V1B_{max}$: IN = 3,
minimum value $V1B_{min}$: IN = 4,
maximum value $V2A_{max}$: OUT = 1,
minimum value $V2A_{min}$: OUT = 2,
maximum value $V2B_{max}$: OUT = 3,
minimum value $V2B_{min}$: OUT = 4.

When the values of the flag (IN) for the input shaft 31 and the flag (OUT) for the output shaft 32 coincide with each other, the processing unit 4a updates the maximum value or the minimum value and uses the updated value for the output voltage correcting operation.

When the detection timing of the maximum value or the minimum value for the input shaft 31 and that for the output shaft 32 differ from each other because of torsion of the torsion bar 34 caused by torque, a flag which was detected previously and has a rewritten value is brought into a standby state.

When the direction of rotation of the steering wheel 30 has changed and a value different from that of the flag in a standby state is rewritten, the processing unit 4a clears both of the flags temporarily. When both the flags were rewritten by the same value simultaneously according to the latest detection condition, the processing unit 4a validates the flags and updates the maximum value or minimum value of the output voltage.

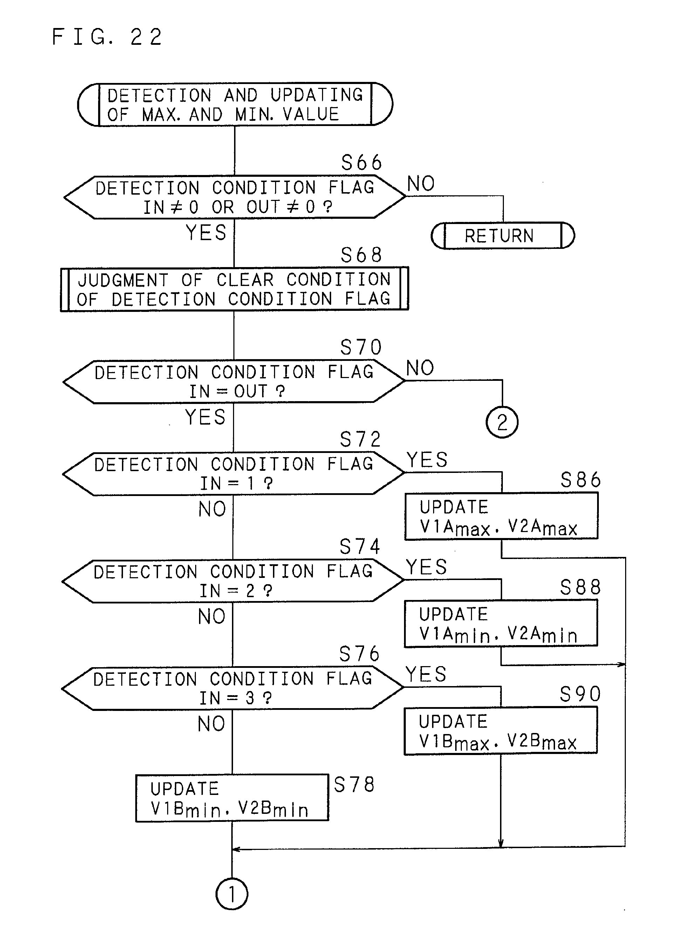

For the detection and updating of the maximum value and minimum value of each of the output voltages V1A, V1B, V2A and V2B of the magnetic sensors 1A, 1B, 2A and 2B (S50), the processing unit 4a judges the values of the flag IN indicating the detection conditions of the magnetic sensors 1A and 1B for the input shaft 31 and the flag OUT indicating the detection conditions of the magnetic sensors 2A and 2B for the output shaft 32 (FIG. 22, S66). If flag IN ≠ 0 and/or flag OUT ≠ 0, the maximum value or minimum value has been newly detected, and thus the processing unit 4a performs a judgment of clear condition of the detection condition flag for bringing the newly written flag into a standby state and clearing the other flag (= 0) (S68). If flag IN ≠ 0 and/or flag OUT ≠ 0 are not satisfied (S66), i.e., flag IN = 0 and flag OUT = 0, since the detection condition has not changed, the processing unit 4a returns process.

Next, the processing unit 4a judges whether or not the flags IN and OUT have the same value (S70). If they have the same value, the processing unit 4a judges whether or not the flag IN is 1, i.e., whether or not the same value is 1 (S72).

If the same value is not 1 (S72), the processing unit 4a judges whether or not the flag IN is 2, i.e., whether or not the same value is 2 (S72).

If the same value is not 2 (S74), the processing unit 4a judges whether or not the flag IN is 3, i.e., whether or not the same value is 3 (S76).

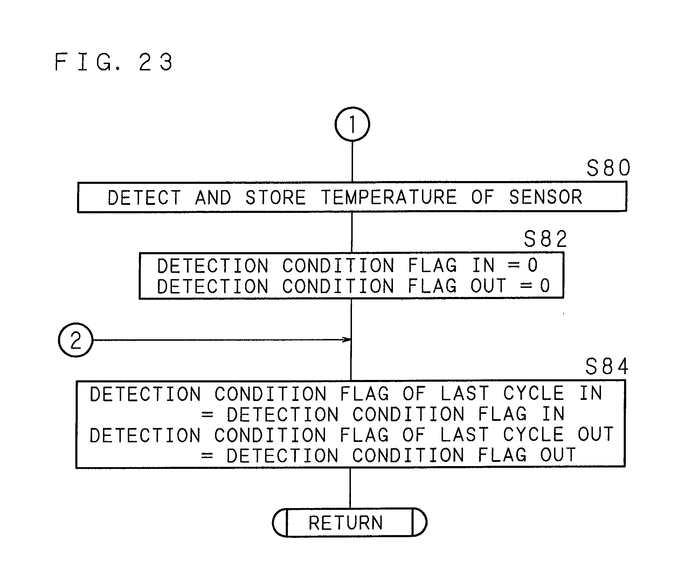

If the same value is not 3 (S76), i.e., the same value is 4, the processing unit 4a judges that the minimum

18

values V1B$_{min}$ and V2B$_{min}$ were simultaneously detected, updates the minimum values V1B$_{min}$ and V2B$_{min}$ (S78), and stores a temperature detected by the temperature detector 5 at this time (FIG. 23, S80).

Next, after clearing the flags IN and OUT (S82), the processing unit 4a judges that the detection condition flag IN of the last cycle is equal to the detection condition flag IN of this cycle and that the detection condition flag OUT of the last cycle is equal to the detection flag OUT of this cycle (S84), and returns process.

If the flag IN is 1 (S72), i.e., if the same value is 1, the processing unit 4a judges that the maximum values V1A$_{max}$ and V2A$_{max}$ were simultaneously detected and updates the maximum values V1A$_{max}$ and V2A$_{max}$ (S86), and then stores a temperature detected by the temperature detector 5 at this time (FIG. 23, S80).

If the flag IN is 2 (S74), i.e., if the same value is 2, the processing unit 4a judges that the minimum values V1A$_{min}$ and V2A$_{min}$ were simultaneously detected and updates the minimum values V1A$_{min}$ and V2A$_{min}$ (S88), and then stores a temperature detected by the temperature detector 5 at this time (FIG. 23, S80).

If the flag IN is 3 (S76), i.e., if the same value is 3, the processing unit 4a judges that the maximum values V1B$_{max}$ and V2B$_{max}$ were simultaneously detected and updates the maximum values V1B$_{max}$ and V2B$_{max}$ (S90), and then stores a temperature detected by the temperature detector 5 at this time (FIG. 23, S80).

The processing unit 4a judges whether or not the flags IN and OUT have the same value (S70). If they do not have the same value, the processing unit 4a judges that the detection condition flag IN of the last cycle is equal to the detection condition flag IN of this cycle and that the detection condition flag OUT of the last cycle is equal to the detection condition flag OUT of this cycle (FIG. 23, S84), and returns process.

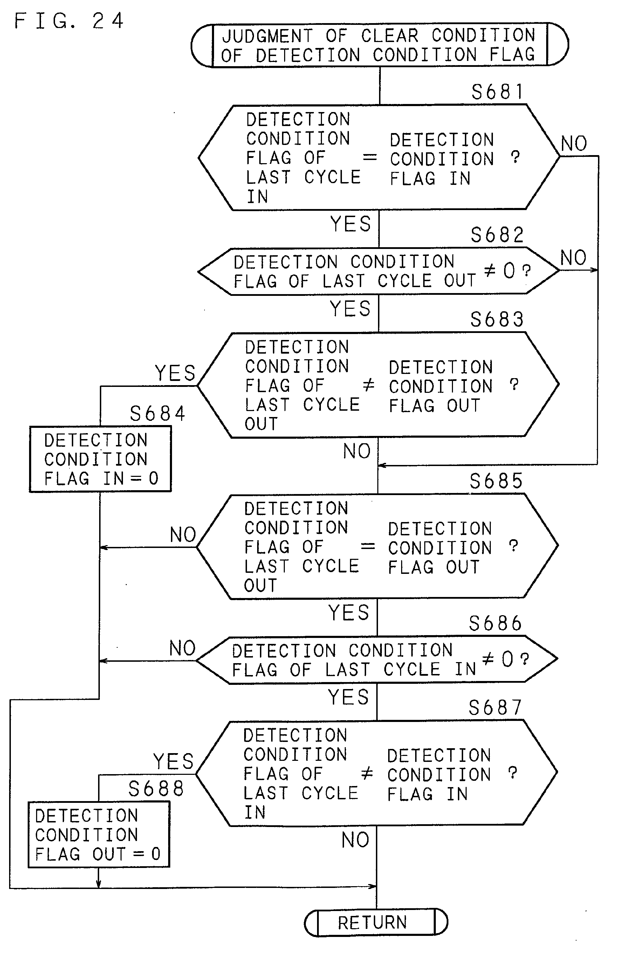

In the step of judging the clear condition of the detection condition flag for bringing the newly written flag into a standby state and clearing the other flag (= 0) (FIG. 22, S68), the processing unit 4a first judges whether or not the detection condition flag IN of the last cycle is equal to the detection condition flag IN of this cycle (FIG. 24, S681). If they are equal, the processing unit 4a judges whether or not the detection condition flag OUT of the last cycle is not 0 (S682).

If the detection condition flag OUT of the last cycle is not 0 (S682), the processing unit 4a judges whether or not the detection condition flag OUT of the last cycle is not equal to the detection condition flag OUT of this cycle (S683). If they are not equal, the processing unit 4a clears the detection condition flag IN (= 0) (S684), and returns process.

If the detection condition flag IN of the last cycle is not equal to the detection condition flag IN of this cycle (S681), the detection condition flag OUT of the last cycle is 0 (S682) or the detection condition flag OUT of the last cycle is equal to the detection condition flag OUT of this cycle (S683), the processing unit 4a judges whether or not the detection condition flag OUT of the last cycle is equal to the detection condition flag OUT of this cycle (S685).

If the detection condition flag OUT of the last cycle is equal to the detection condition flag OUT of this cycle (S685), the processing unit 4a judges whether or not the detection condition flag IN of the last cycle is not 0 (S686).

If the detection condition flag IN of the last cycle is not 0 (S686), the processing unit 4a judges whether or not the detection condition flag IN of the last cycle is not equal to the detection condition flag IN of this cycle (S687). If they are not equal, the processing unit 4a clears the detection condition flag OUT (= 0) (S688), and returns process.

If the detection condition flag OUT of the last cycle is not equal to the detection condition flag OUT of this cycle (S685), the processing unit 4a returns process immediately.

If the detection condition flag IN of the last cycle is 0 (S686), the processing unit 4a returns process immediately.

If the detection condition flag IN of the last cycle is equal to the detection condition flag IN of this cycle (S687), the processing unit 4a returns process immediately.

Note that since the operation of calculating the gain correction coefficients (S16), the operation of calculating the offset correction coefficients (S18) and the operation of correcting each of the detected output voltages V1A, V1B, V2A and V2B (S20) are the same as the operations explained in Embodiment 2, similar operations are designated with the same step numbers and an explanation thereof is omitted.

While the above-described embodiments illustrate the application to the steering shaft 3 connecting the steering wheel 30 and the steering mechanism in a steering apparatus for an automobile, it is, of course, possible to widely use the rotational angle detecting device and torque detecting device according to the present invention in the whole applications for detecting the rotational angle and rotational torque of a rotating shaft rotating about its axis.

The target is not particularly limited if the output signal (detection signal) of the magnetic sensor (detecting means) varies with a rotation of the target plate (rotational member). For example, it is possible to form protrusions at substantially equal intervals in the circumferential direction of the target plate 2 so that the distance between the magnetic sensor and adjacent protrusion changes according to a rotation of the target plate 2. By providing the protrusions on the outer circumference of the target plate 2, the rotational angle and torque can be detected in the same manner as the above-described gear-type target plate.

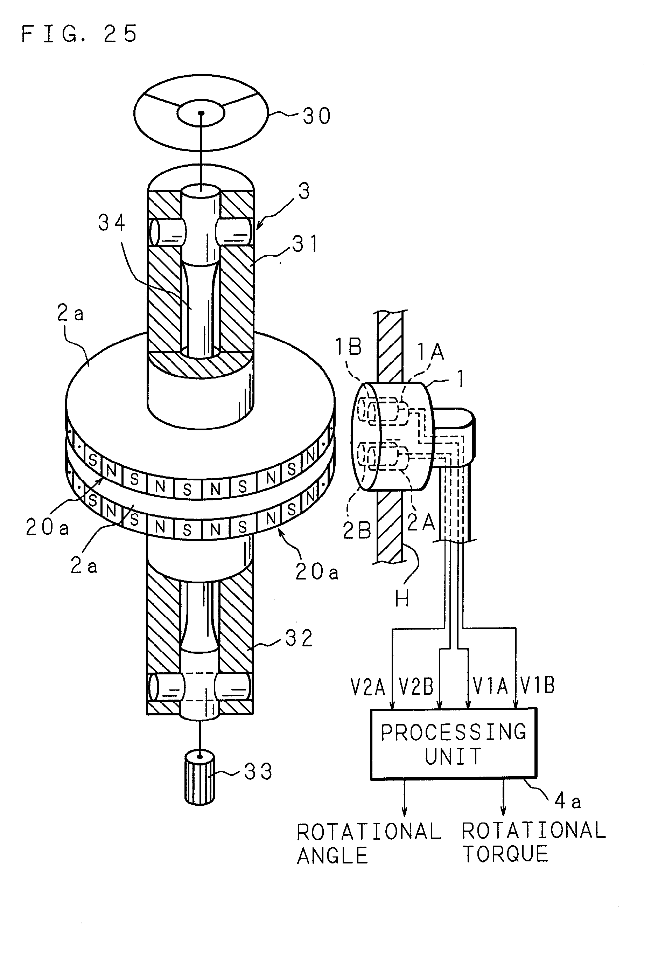

Moreover, as shown in FIG. 25, it is possible to magnetize the outer circumference 20a of a target plate 2a so that the magnetic poles reverse at substantially equal intervals in the circumferential direction. Since the polarity of the magnetic pole approaching each of the magnetic sensors 1A, 1B, 2A and 2B changes alternately between positive and negative (N and S), according to a rotation of the target plate 2a, the distance between each of the magnetic sensors 1A, 1B, 2A, 2B and adjacent magnetic pole (the magnetic field strength to be detected) changes, and an output voltage in the form of a sine wave or a triangular wave is outputted. Thus, the rotational angle and torque can be detected in the same manner as in the above-described embodiments.

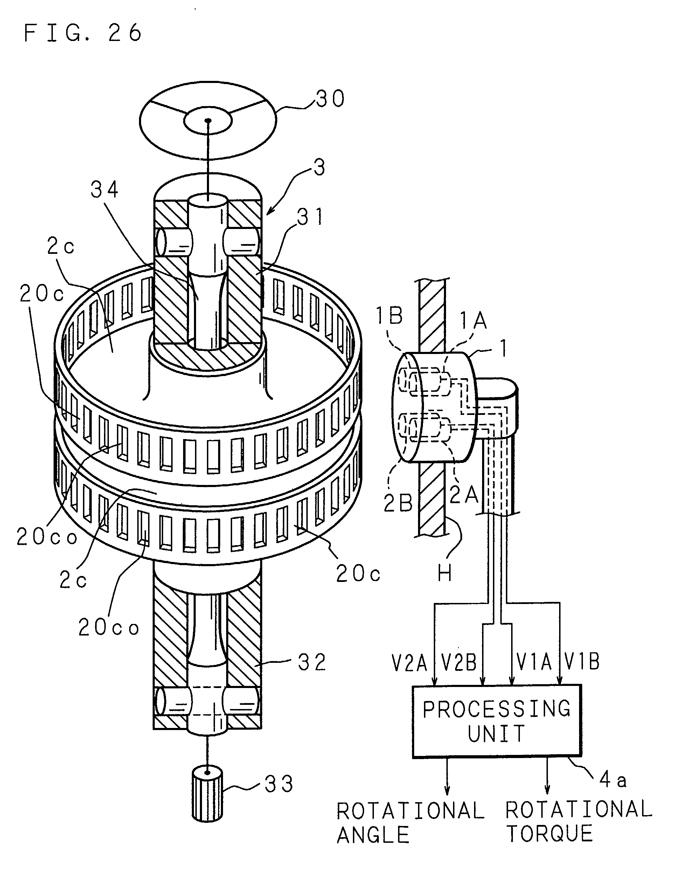

Additionally, as shown in FIG. 26, it is also possible to form dents 20co at substantially equal intervals in the circumferential direction of a target plate 2c so as to create non-dent portions 20c. In this embodiment, the dents 20co are through-holes. Since a non-dent portion 20c and a dent 20co alternately approaches each of the magnetic sensors 1A, 1B, 2A and 2B, the distance between each of the magnetic sensors 1A, 1B, 2A, 2B and adjacent non-dent portion 20c or dent 20co changes, and an output voltage in the form of a sine wave or a triangular wave is outputted. Thus, the rotational angle and torque can be detected in the same manner as in the above-described embodiments.

As described above, in the rotational angle detecting device according to the first invention, it is possible to correct the gain by the gain correcting means, based on a difference calculated by the means for detecting the maximum value and minimum value of the detection signal multiplied by the gain and the means for calculating the difference between the maximum value and minimum value. Since the gain is corrected during the detection of the rotational angle, based on the difference between the maximum value and minimum value of the detection signal, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a rotational angle detecting device capable of performing detection with high accuracy over a long time.

In the rotational angle detecting device according to the second invention, the means for calculating a corrective gain can calculate a corrective gain by multiplying a preset reference gain by a ratio calculated by the means for calculating the ratio of the difference between the maximum value and minimum value of the detection signal to the reference difference. By multiplying the detection signal by the corrective gain, it is possible to cause the detection signal to coincide with the reference output characteristic and accurately calculate the rotational angle based on this result.

In the rotational angle detecting device according to the third invention, it is possible to correct the offset of the detection signal by the offset correcting means, based on an average value calculated by the means for detecting the maximum value and minimum value of the detection signal and the means for calculating an average value of the maximum value and minimum value. Since the offset is corrected during the detection of the rotational angle, based on the average value of the maximum value and minimum value of the detection signal, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a rotational angle detecting device capable of performing detection with high accuracy over a long time.

In the rotational angle detecting device according to the fourth invention, a difference calculated by the means for calculating the difference between the average value of the maximum value and minimum value of the detection signal and a preset reference average value is added to the detection signal value to invalidate the offset and eliminate the influence of change in the gap, thereby accurately calculating the rotational angle.

In the rotational angle detecting device of the fifth invention, the distance between the target and the detecting means changes according to a rotation of the rotational member, and the detection signal changes according to the change in the distance. It is therefore possible to calculate the rotational angle of the rotational member by the angle calculating means, based on the change in the detection signal.

In the rotational angle detecting device of the sixth invention, since the detection signal changes according to the distance between the detecting means and the protrusion approaching the detecting means according to a rotation of the rotational member, it is possible to calculate the rotational angle of the rotational member by the angle calculating means, based on the change in the detection signal.

In the rotational angle detecting device of the seventh invention, a dent portion and a non-dent portion alternately approaches the detecting means according to a rotation of the rotational member, and the detection signal changes according to the distance from the dent portion or the non-dent portion. It is therefore possible to calculate the rotational angle of the rotational member by the angle calculating means, based on the change in the detection signal.

In the rotational angle detecting device of the eighth invention, the polarity of the magnetic pole approaching the detecting means according to a rotation of the rotational member changes alternately between positive and negative (N and S), and the detection signal according to the distance between the detecting means and the magnetic pole is outputted. It is therefore possible to calculate the rotational angle of the rotational member by the angle calculating means, based on the change in the detection signal.

In the rotational angle detecting device of the ninth invention, it is possible to mutually compensate for regions of the detection signals having a small change with respect to the rotational angle by the first and second detecting means for outputting detection signals having a phase difference.

In the rotational angle detecting device according to the tenth invention, the first judging means judges whether or not each of the detection signals of the first detecting means and second detecting means is higher than the first threshold, the second judging means judges whether or not each of the detection signals of the first detecting means and second detecting means is lower than the second threshold, the third judging means judges whether or not the detection signal waveforms of the first detecting means and second detecting means cross each other, and the maximum value and minimum value are detectable based on the results of the judgements made by the first, second and third judging means.

In the torque detecting device according to the eleventh invention, the torque calculating means calculates a torque applied to the first rotating shaft, based on the difference between the rotational angles detected by the rotational angle detecting devices of any one of the first through tenth inventions provided for the first rotating shaft and the second rotating shaft. It is possible to prevent detection errors resulting from the difference in the output characteristics of the individual detecting means by including compensation for characteristic change due to temperature and characteristic change with time and further prevent detection errors resulting from change in the air gap between the target and the detecting means by correcting the gain and/or offset by the gain correcting means and/or the offset correcting means, thereby realizing a torque detecting device capable of performing detection with high accuracy over a long time.

In the torque detecting device according to the twelfth invention, when the first detecting means and second detecting means of the rotational angle detecting devices provided for the first and second rotating shafts detected the maximum values, the maximum values are made valid. When they detected the minimum values, the minimum values are made valid. Accordingly, it is possible to realize a torque detecting device capable of preventing correction errors due to a difference in the detecting timings of the maximum value and the minimum value resulting from torsion caused by the application of torque in the rotational angle detecting devices provided at two positions.

In the torque detecting device according to the thirteen invention, the temperature detecting means detects the temperature of the first detecting means and second detecting means, and the storing means stores the temperature detected when the maximum value or the minimum value of each of the detection signals of the first detecting means and second detecting means was detected. Moreover, when the angle calculating means calculates the rotational angle, the comparing means calculates the difference between the temperature detected by the temperature detecting means and the temperature stored by the storing means, and compares the calculated difference with a predetermined value. When the difference is greater than the predetermined value, the calculation by the angle calculating means is prohibited, thereby realizing a torque detecting device capable of preventing detection errors resulting from the difference in the temperature characteristics of the individual detecting means.

Since the steering apparatus according to the fourteenth invention comprises the torque detecting device of any one of the eleventh through thirteenth inventions, it is possible to prevent detection errors resulting from the difference in the output characteristics of the individual detecting means by including compensation for characteristic change due to temperature and characteristic change with time, and further prevent detection errors resulting from change in the air gap between the target and the detecting means, thereby realizing a steering apparatus for automobiles, using a torque detecting device capable of detecting a torque with high accuracy over a long time.

**Claims**

1. A rotational angle detecting device comprising: detecting means for detecting a position of a target and outputting a detection signal according to the detected position; a rotational member on which said target is provided so that the detection signal changes according to a rotation; and angle calculating means for calculating a rotational angle of said rotational member based on the detection signal multiplied by a gain, **characterized by** further comprising:

   means (4) for detecting a maximum value and a minimum value of the detection signal multiplied by said gain;
   means (4) for calculating a difference between the detected maximum value and minimum value: and
   gain correcting means (4) for correcting said gain so that the calculated difference is equal to a preset reference difference.

2. The rotational angle detecting device as set forth in Claim 1, **characterized by** further comprising:

   means (4) for calculating a ratio of said calculated difference to said reference difference; and
   means (4) for calculating a corrective gain by multiplying a preset reference gain by said calculated ratio; wherein
   said gain correcting means (4) corrects said gain to said corrective gain.

3. A rotational angle detecting device comprising: detecting means for detecting a position of a target and outputting a detection signal according to the detected position; a rotational member on which said target is provided so that the detection signal changes according to a rotation; and angle calculating means for calculating a rotational angle of said rotational member based on the detection signal multiplied by a gain, **characterized by** further comprising:

> means (4) for detecting a maximum value and a minimum value of said detection signal;
> means (4) for calculating an average value of the detected maximum value and minimum value: and
> offset correcting means (4) for correcting said detection signal so that the calculated average value is equal to a preset reference average value.

4. The rotational angle detecting device as set forth in Claim 3, **characterized by** further comprising:

> means (4) for calculating a difference between said calculated average value and said reference average value, wherein
> said offset correcting means (4) adds said difference to said detection signal value so that the calculated difference becomes zero.

5. The rotational angle detecting device as set forth in any one of Claims 1 through 4, **characterized in that** said target (20) is provided on said rotational member (2) so that a distance between said target (20) and said detecting means (1A; 2A; 1B; 2B) changes according to a rotation.

6. The rotational angle detecting device as set forth in any one of Claims 1 through 4, **characterized in that** said target (20) is made of protrusions provided at substantially equal intervals in a circumferential direction of said rotational member (2).

7. The rotational angle detecting device as set forth in any one of Claims 1 through 4, **characterized in that** said target (20) is made of non-dent portions (20c) between dents (20co) formed at substantially equal intervals in a circumferential direction of said rotational member (2) so as to create the non-dent portions.

8. The rotational angle detecting device as set forth in any one of Claims 1 through 4, **characterized in that** said target (20) is magnetized so that magnetic poles reverse at substantially equal intervals in a circumferential direction of said rotational member (2).

9. The rotational angle detecting device as set forth in any one of Claims 1 through 8, **characterized in that** said detecting means comprises first detecting means (1A; 2A) and second detecting means (1B; 2B), juxtaposed in a direction of rotation of said rotational member (2), for outputting detection signals having a phase difference.

10. The rotational angle detecting device as set forth in Claim 9, **characterized by** comprising:

> first judging means (4) for judging whether or not each of the detection signals of said first detecting means (1A; 2A) and second detecting means (1B; 2B) is higher than a first threshold greater than a detection signal value obtained when detection signal waveforms of said first detecting means (1A; 2A) and second detecting means (1B; 2B) crossed each other;
> second judging means (4) for judging whether or not each of the detection signals of said first detecting means (1A; 2A) and second detecting means (1B; 2B) is lower than a second threshold smaller than a detection signal value obtained when the detection signal waveforms of said first detecting means (1A; 2A) and second detecting means (1B; 2B) crossed each other; and
> third judging means (4) for judging whether or not the detection signal waveforms of said first detecting means (1A; 2A) and second detecting means (1B; 2B) cross each other; wherein
> the maximum value and minimum value of said detection signal are detected based on results of judgements made by said first, second and third judging means (4).

11. A torque detecting device, **characterized by** comprising:

> said rotational angle detecting devices of any one of Claims 1 through 10, provided for each of a first rotating shaft (31) and a second rotating shaft (32) which are coaxially connected to each other; and
> torque calculating means (4) for calculating a torque applied to said first rotating shaft (31), based on a difference between rotational angles detected by said rotational angle detecting devices.

**12.** A torque detecting device, **characterized by** comprising:

said rotational angle detecting devices of Claim 9 or 10, provided for each of a first rotating shaft (31) and a second rotating shaft (32) which are coaxially connected to each other; and

torque calculating means (4) for calculating a torque applied to said first rotating shaft (31), based on a difference between rotational angles detected by said rotational angle detecting devices; wherein

when both the first detecting means (1A and 2A) and both the second detecting means (1B and 2B) of said rotational angle detecting devices detected the maximum values, the maximum values are made valid, while when both the first detecting means (1A and 2A) and both the second detecting means (1B and 2B) detected the minimum values, the minimum values are made valid.

**13.** The torque detecting device as set forth in Claim 12,
   **characterized by** further comprising:

temperature detecting means (5) for detecting temperature of said first detecting means (1A; 2A) and second detecting means (1B; 2B);

storing means (4) for storing a temperature detected by said temperature detecting means (5) when the maximum value or the minimum value of each of the detection signals of said first detecting means (1A; 2A) and second detecting means (1B; 2B) was detected; and

means (4) for calculating a difference between the temperature detected by said temperature detecting means (5) and the temperature stored in said storing means (4) and comparing the calculated difference with a predetermined value when said angle calculating means (4) calculates a rotational angle; wherein

when the difference is greater than the predetermined value, the calculation of said angle calculating means (4) is prohibited.

**14.** A steering apparatus, **characterized by** comprising:

a first rotating shaft (31) connected to a steering wheel;

a second rotating shaft (32) connected coaxially to said first rotating shaft (31) and connected to a steering mechanism;

said torque detecting device of any one of Claims 11 through 13, for detecting a steering torque applied to said first rotating shaft (31); and

an electric motor for assisting a rotation of said second rotating shaft (32), based on the steering torque.

FIG. 1

PROCESSING
UNIT

ROTATIONAL      ROTATIONAL
ANGLE          TORQUE

# FIG. 2

EP 1 293 752 A1

FIG. 3

FIG. 4

```
                    ┌─────────┐
                    │  STRAT  │
                    └─────────┘
                         │
              ┌──────────────────────┐  S1
              ╱      ROTATE           ╲
             ╱   CORRESPONDING         ╲────── NO
             ╲    ONE TARGET           ╱
              ╲        ?              ╱
              └──────────────────────┘
                    YES │
        ┌─────────────────────────────────┐ S2
        │  EXTRACT V1A_max, V1B_max        │
        │  AND V1A_min, V1B_min            │
        └─────────────────────────────────┘
                         │
   ┌──────────────────────────────────────────────┐ S3
   │ V1A_PP=V1A_max-V1A_min, V1B_PP=V1B_max-V1B_min │
   └──────────────────────────────────────────────┘
                         │
        ┌─────────────────────────────────┐ S4
        │  K_{n+1}=K_0×V1A_PP/V1A_PP0       │
        │  k_{n+1}=k_0×V1B_PP/V1B_PP0       │
        └─────────────────────────────────┘
                         │
        ┌─────────────────────────────────┐ S5
        │  V1A_mid=(V1A_max+V1A_min)/2      │
        │  V1B_mid=(V1B_max+V1B_min)/2      │
        └─────────────────────────────────┘
                         │
        ┌─────────────────────────────────┐ S6
        │  C_{n+1}=V1A_mid-V1A_mid0         │
        │  c_{n+1}=V1B_mid-V1B_mid0         │
        └─────────────────────────────────┘
                         │
              ┌──────────────────────┐ S7
              ╱     ROTATE ONE        ╲───── NO
              ╲       TIME ?          ╱
              └──────────────────────┘
                    YES │
        ┌─────────────────────────────────┐ S8
        │  CALCULATE ΣV1A_max, ΣV1A_min,    │
        │  ΣV1B_max AND ΣV1B_min            │
        └─────────────────────────────────┘
                         │
   ┌──────────────────────────────────────────────┐ S9
   │ K_m=K_0×(ΣV1A_max-ΣV1A_min)/(Z×V1A_PP0)       │
   │ k_m=k_0×(ΣV1B_max-ΣV1B_min)/(Z×V1B_PP0)       │
   └──────────────────────────────────────────────┘
                         │
              ┌──────────────────────┐ S10
              ╱      END OF           ╲───── NO
              ╲   OPERATION ?         ╱
              └──────────────────────┘
                    YES │
                    ┌─────────┐
                    │   END   │
                    └─────────┘
```

S2: EXTRACT $V1A_{max}$, $V1B_{max}$ AND $V1A_{min}$, $V1B_{min}$

S3: $V1A_{PP}=V1A_{max}-V1A_{min}$, $V1B_{PP}=V1B_{max}-V1B_{min}$

S4: $K_{n+1}=K_0 \times V1A_{PP}/V1A_{PP0}$
$k_{n+1}=k_0 \times V1B_{PP}/V1B_{PP0}$

S5: $V1A_{mid}=(V1A_{max}+V1A_{min})/2$
$V1B_{mid}=(V1B_{max}+V1B_{min})/2$

S6: $C_{n+1}=V1A_{mid}-V1A_{mid0}$
$c_{n+1}=V1B_{mid}-V1B_{mid0}$

S8: CALCULATE $\Sigma V1A_{max}$, $\Sigma V1A_{min}$, $\Sigma V1B_{max}$ AND $\Sigma V1B_{min}$

S9: $K_m=K_0 \times (\Sigma V1A_{max}-\Sigma V1A_{min})/(Z \times V1A_{PP0})$
$k_m=k_0 \times (\Sigma V1B_{max}-\Sigma V1B_{min})/(Z \times V1B_{PP0})$

FIG. 5

FIG. 6

FIG. 7

V2A  V2B    V1A  V1B

PROCESSING
UNIT

4a

ROTATIONAL       ROTATIONAL
ANGLE            TORQUE

FIG. 8

| DETEC-TION MODE | START CONDITION OF DETECTION | DEFINITION / INTERRUPTION | OPERATION | MODE AFTER CHANGED |
|---|---|---|---|---|
| 0 | INITIAL MODE (NOT YET DETECTED) | * | * | * |
| 1 | VA > UPPER BOUND THRESHOLD START $VA_{max}$ DETECTION | CROSS VA AND VB | $VA_{max}$ IS DEFINED | 2 |
| | | VB < LOWER BOUND THRESHOLD | INTERRUPTION | 6 |
| 2 | VB AT LINEAR REGION, CROSS VA AND VB START $VA_{min}$ DETECTION | VB > UPPER BOUND THRESHOLD | $VA_{min}$ IS DEFINED | 4 |
| 3 | VA < LOWER BOUND THRESHOLD START $VA_{min}$ DETECTION | CROSS VA AND VB | $VA_{min}$ IS DEFINED | 2 |
| | | VB > UPPER BOUND THRESHOLD | INTERRUPTION | 4 |
| 4 | VB > UPPER BOUND THRESHOLD START $VB_{max}$ DETECTION | CROSS VA AND VB | $VB_{max}$ IS DEFINED | 5 |
| | | VA < LOWER BOUND THRESHOLD | INTERRUPTION | 3 |
| 5 | VA AT LINEAR REGION, CROSS VA AND VB START $VB_{max}$ DETECTION | VA < LOWER BOUND THRESHOLD | $VB_{max}$ IS DEFINED | 3 |
| 6 | VB < LOWER BOUND THRESHOLD START $VB_{min}$ DETECTION | CROSS VA AND VB | $VB_{min}$ IS DEFINED | 5 |
| | | VA > UPPER BOUND THRESHOLD | INTERRUPTION | 1 |

FIG. 9

OUTPUT
VOLTAGE

VB_max   VA_max   VB_max

UPPER BOUND
THRESHOLD

CROSS VA
AND VB

CROSS VA
AND VB

CROSS VA
AND VB

VA   VB   VA

LOWER BOUND
THRESHOLD

VB_min   VA_min

ROTATIONAL ANGLE

EP 1 293 752 A1

FIG. 10

```
┌─────────────────────────────┐
│  CORRECTION OPERATION       │
│  OF MR SENSOR OUTPUT        │
└─────────────────────────────┘
              │
┌─────────────────────────────┐  S12
│  DETECT AND UPDATE          │
│  MAX. AND MIN. VALUE        │
└─────────────────────────────┘
              │
              │           S14
         ╱─────────────╲          NO
        ╱  ALL SENSOR   ╲─────────────┐
        ╲  OUTPUTS       ╱            │
         ╲ ARE DETECTED? ╱            │
          ╲─────────────╱             │
              │ YES                   │
┌─────────────────────────────┐  S16  │
│  CALCULATE GAIN             │       │
│  CORRECTION COEFFICIENT     │       │
└─────────────────────────────┘       │
              │                        │
┌─────────────────────────────┐  S18  │
│  CALCULATE OFFSET           │       │
│  CORRECTION COEFFICIENT     │       │
└─────────────────────────────┘       │
              │                        │
┌─────────────────────────────┐  S20  │
│  CORRECT OUTPUT             │       │
└─────────────────────────────┘       │
              │                        │
              │◄───────────────────────┘
         ┌─────────────┐
         │  RETURN     │
         └─────────────┘
```

FIG. 11

DETECTION AND UPDATING
OF MAX. AND MIN. VALUE

S22
DETECTION CONDITION
DETECTION MODE = 1 ?  — YES → S36 DETECTION MODE OF $VA_{max}$

NO

S24
DETECTION CONDITION
DETECTION MODE = 2 ?  — YES → S38 DETECTION MODE OF $VA_{min}$

NO

S26
DETECTION CONDITION
DETECTION MODE = 3 ?  — YES → S40 DETECTION MODE OF $VA_{min}$

NO

S28
DETECTION CONDITION
DETECTION MODE = 4 ?  — YES → S42 DETECTION MODE OF $VB_{max}$

NO

S30
DETECTION CONDITION
DETECTION MODE = 5 ?  — YES → S44 DETECTION MODE OF $VB_{max}$

NO

S32
DETECTION CONDITION
DETECTION MODE = 6 ?  — YES → S46 DETECTION MODE OF $VB_{min}$

NO

INITIAL MODE S34

RETURN

FIG. 12A

$$\text{CALCULATION OF GAIN CORRECTION COEFFICIENT}$$

S161

$$KA = V_{PP0} / (VA_{max} - VA_{min})$$

S162

$$KB = V_{PP0} / (VB_{max} - VB_{min})$$

RETURN

FIG. 12B

$$\text{CALCULATION OF OFFSET CORRECTION COEFFICIENT}$$

S181

$$VA_{mid} = (VA_{max} + VA_{min}) / 2$$

S182

$$VB_{mid} = (VB_{max} + VB_{min}) / 2$$

RETURN

FIG. 12C

$$\text{CORRECTION OF OUTPUT}$$

S201

$$VA' = (VA - VA_{mid}) * KA + V_{mid}$$

S202

$$VB' = (VB - VB_{mid}) * KB + V_{mid}$$

RETURN

# FIG. 13

INITIAL MODE

S341
REGION INCREASING IN LAST CYCLE = VA ? — NO

YES

S342
VA > UPPER BOUND THRESHOLD ? — YES → S351 DETECTION MODE = 1

NO

S343
VA < LOWER BOUND THRESHOLD ? — YES → S352 DETECTION MODE = 3

NO

S344
CROSS VA AND VB ? — YES → S353 DETECTION MODE = 5

NO

S345
VB > UPPER BOUND THRESHOLD ? — YES → S348 DETECTION MODE = 4

NO

S346
VB < LOWER BOUND THRESHOLD ? — YES → S349 DETECTION MODE = 6

NO

S347
CROSS VA AND VB ? — YES → S350 DETECTION MODE = 2

NO

RETURN

EP 1 293 752 A1

FIG. 14

DETECTION MODE OF $VA_{max}$

S361
VB < LOWER BOUND THRESHOLD ? — YES
NO

DETECTION MODE = 6   S365

S362
CROSS VA AND VB ? — YES
NO

S366
DETECTION OF $VA_{max}$ IS DEFINED
$VA_{max} = VA_{max-pre}$

DETECTION MODE = 2   S367

S368
CLEAR TEMPORARY DETECTION
OF $VA_{max}$
$VA_{max-pre} = V_{mid}$

S363
NO — $VA > VA_{max-pre}$ ?
YES
S364
$VA_{max-pre} = VA$

RETURN

FIG. 15

```
( DETECTION MODE OF VA_min )
                    |
                                    S382
    < VB > UPPER BOUND ? >───── YES
          THRESHOLD                  |
             NO                      |
                                                      S389
                     ┌─────────────────────────────────┐
                     │ DETECTION OF VA_min IS DEFINED   │
                     │ VA_min = VA_min-pre              │
                     └─────────────────────────────────┘
                                     |
                              ┌─────────────────┐ S390
                              │ DETECTION MODE = 4 │
                              └─────────────────┘
                                                      S391
                     ┌─────────────────────────────────┐
                     │ CLEAR TEMPORARY DETECTION        │
                     │ OF VA_min                        │
                     │ VA_min-pre = V_mid               │
                     └─────────────────────────────────┘
                                     |
                          S385
  NO < VA < VA_min-pre ? >           |
      |        YES                   |
      |              S386            |
      |   ┌──────────────────┐       |
      |   │ VA_min-pre = VA  │       |
      |   └──────────────────┘       |
      |        |                     |
      └────────┼─────────────────────┘
               |
         ( RETURN )
```

FIG. 16

```
       ( DETECTION MODE OF VAmin )
                    │
                    │              S401
          ┌─────────┴─────────┐  YES
         <  VB > UPPER BOUND ? >─────────┐
          │      THRESHOLD    │          │
          └─────────┬─────────┘          │
                    NO          ┌─────────────────────────┐
                    │           │ DETECTION MODE = 4      │ S405
                    │           └─────────────┬───────────┘
                    │              S402        │
          ┌─────────┴─────────┐  YES           │
         <  CROSS VA AND VB ? >──────┐          │
          └─────────┬─────────┘      │          │
                    NO               │      S406 │
                    │    ┌───────────┴──────────────────┐
                    │    │ DETECTION OF VAmin IS DEFINED │
                    │    │ VAmin=VAmin-pre               │
                    │    └───────────┬──────────────────┘
                    │       ┌────────┴──────────┐
                    │       │ DETECTION MODE = 2│ S407
                    │       └────────┬──────────┘
                    │                │◄─────────┘
                    │          S408   │
                    │    ┌────────────┴──────────────┐
                    │    │ CLEAR TEMPORARY DETECTION │
                    │    │ OF VAmin                  │
                    │    │ VAmin-pre=Vmid            │
                    │    └────────────┬──────────────┘
                    │          S403    │
          NO ┌──────┴──────────┐       │
        ┌───< VA<VAmin-pre ?  >        │
        │    └──────┬──────────┘       │
        │          YES      S404        │
        │    ┌──────┴──────────┐        │
        │    │ VAmin-pre=VA    │        │
        │    └──────┬──────────┘        │
        └───────────┼───────────────────┘
                    │
              ( RETURN )
```

FIG. 17

DETECTION MODE OF $VB_{max}$

S421
$VA <$ LOWER BOUND THRESHOLD ? — YES

NO

DETECTION MODE = 3   S425

S422
CROSS VA AND VB ? — YES

NO

S426
DETECTION OF $VB_{max}$ IS DEFINED
$VB_{max} = VB_{max-pre}$

DETECTION MODE = 5   S427

S428
CLEAR TEMPORARY DETECTION
OF $VB_{max}$
$VB_{max-pre} = V_{mid}$

S423
NO — $VB > VB_{max-pre}$ ?

YES
S424
$VB_{max-pre} = VB$

RETURN

FIG. 18

DETECTION MODE OF $VB_{max}$

S441

$VA < $ LOWER BOUND THRESHOLD ? — YES

NO

S447

DETECTION OF $VB_{max}$ IS DEFINED
$VB_{max}=VB_{max-pre}$

DETECTION MODE = 3   S448

S452

CLEAR TEMPORARY DETECTION
OF $VB_{max}$
$VB_{max-pre}=V_{mid}$

S443

NO — $VB>VB_{max-pre}$ ?

YES   S444

$VB_{max-pre}=VB$

RETURN

FIG. 19

```
┌─────────────────────────────────────┐
│   DETECTION MODE OF VBmin            │
└─────────────────────────────────────┘
                    │
            S461    │
     ┌──────────────────────────┐   YES
    <  VA >  UPPER BOUND  ?      >─────────┐
     └   THRESHOLD              ┘          │
            │ NO                           │
                                  ┌──────────────────────┐
                                  │ DETECTION MODE = 1   │ S465
                                  └──────────────────────┘
            S462                            │
     ┌──────────────────────────┐   YES
    <  CROSS VA AND VB ?         >─────────┐
     └                          ┘          │
            │ NO                           │
                                  ┌──────────────────────────────────┐ S466
                                  │ DETECTION OF VBmin IS DEFINED     │
                                  │ VBmin = VBmin-pre                 │
                                  └──────────────────────────────────┘
                                            │
                                  ┌──────────────────────┐ S467
                                  │ DETECTION MODE = 5   │
                                  └──────────────────────┘
                                            │
                                  ┌──────────────────────────────────┐ S468
                                  │ CLEAR TEMPORARY DETECTION         │
                                  │ OF VBmin                          │
                                  │ VBmin-pre = Vmid                  │
                                  └──────────────────────────────────┘
            S463                            │
  NO ┌──────────────────────────┐
    <  VB < VBmin-pre ?          >
     └                          ┘
            │ YES
            │       S464
     ┌──────────────────┐
     │ VBmin-pre = VB   │
     └──────────────────┘
                    │
          ┌──────────────────┐
          │     RETURN        │
          └──────────────────┘
```

$VA > $ UPPER BOUND THRESHOLD ?

DETECTION MODE = 1

CROSS VA AND VB ?

DETECTION OF $VB_{min}$ IS DEFINED
$VB_{min} = VB_{min-pre}$

DETECTION MODE = 5

CLEAR TEMPORARY DETECTION OF $VB_{min}$
$VB_{min-pre} = V_{mid}$

$VB < VB_{min-pre}$ ?

$VB_{min-pre} = VB$

FIG. 20

FIG. 21

```
     ╭─────────────────────────╮
     │ CORRECTION OPERATION    │
     │ OF MR SENSOR OUTPUT     │
     ╰─────────────────────────╯
                 │
     ┌─────────────────────────┐
     │║ DETECT AND UPDATE       │ S50
     │║ MAX. AND MIN. VALUE     │
     └─────────────────────────┘
                 │          S52
          ╱───────────────╲
         ╱  ALL SENSOR OUTPUTS ╲──── NO ───┐
         ╲    ARE DETECTED?    ╱           │
          ╲───────────────╱                │
                 │ YES                      │
     ┌─────────────────────────┐           │
     │ DETECT SENSOR TEMPERATURE│ S54       │
     └─────────────────────────┘           │
                 │            S56           │
        ╱──────────────────────╲           │
       ╱ |TEMP. AT UPDATE − CURRENT TEMP.| ╲─ NO ─┤
       ╲           <                       ╱      │
        ╲    PREDETERMINED VALUE          ╱       │
         ╲          ?           ╱                 │
          ╲──────────────────╱                    │
                 │ YES                             │
     ┌─────────────────────────┐                  │
     │║ CALCULATE GAIN          │ S16              │
     │║ CORRECTION COEFFICIENT  │                  │
     └─────────────────────────┘                  │
                 │                                 │
     ┌─────────────────────────┐                  │
     │║ CALCULATE OFFSET        │ S18              │
     │║ CORRECTION COEFFICIENT  │                  │
     └─────────────────────────┘                  │
                 │                                 │
     ┌─────────────────────────┐                  │
     │║ CORRECT OUTPUT          │ S20              │
     └─────────────────────────┘                  │
                 │                                 │
                 │       ┌─────────────────────┐  │
                 │       │ INVALIDATE          │ S58
                 │       │ OUTPUT CORRECTION   │◄─┘
                 │       └─────────────────────┘
                 │◄──────────────┘
                 │
          ╭─────────────╮
          │ RETURN      │
          ╰─────────────╯
```

FIG. 22

DETECTION AND UPDATING
OF MAX. AND MIN. VALUE

S66
DETECTION CONDITION FLAG
IN ≠ 0 OR OUT ≠ 0 ?  —NO→  RETURN

YES

S68
JUDGMENT OF CLEAR CONDITION
OF DETECTION CONDITION FLAG

S70
DETECTION CONDITION FLAG
IN = OUT ?  —NO→  ②

YES

S72
DETECTION CONDITION FLAG
IN = 1 ?  —YES→  S86 UPDATE $V1A_{max}$, $V2A_{max}$

NO

S74
DETECTION CONDITION FLAG
IN = 2 ?  —YES→  S88 UPDATE $V1A_{min}$, $V2A_{min}$

NO

S76
DETECTION CONDITION FLAG
IN = 3 ?  —YES→  S90 UPDATE $V1B_{max}$, $V2B_{max}$

NO

S78 UPDATE $V1B_{min}$, $V2B_{min}$

①

FIG. 23

(1)

S80

DETECT AND STORE TEMPERATURE OF SENSOR

S82

DETECTION CONDITION FLAG IN = 0
DETECTION CONDITION FLAG OUT = 0

(2)

S84

DETECTION CONDITION FLAG OF LAST CYCLE IN
= DETECTION CONDITION FLAG IN
DETECTION CONDITION FLAG OF LAST CYCLE OUT
= DETECTION CONDITION FLAG OUT

RETURN

FIG. 24

JUDGMENT OF CLEAR CONDITION
OF DETECTION CONDITION FLAG

S681

DETECTION
CONDITION
FLAG OF    = DETECTION
LAST CYCLE   CONDITION ?
IN           FLAG IN
— NO

YES

S682

DETECTION CONDITION
FLAG OF LAST CYCLE OUT ≠ 0 ? — NO

YES

S683

DETECTION
CONDITION
YES — FLAG OF    ≠ DETECTION
LAST CYCLE   CONDITION ?
OUT          FLAG OUT

S684
DETECTION
CONDITION
FLAG IN = 0

NO

S685

DETECTION
CONDITION
NO — FLAG OF    = DETECTION
LAST CYCLE   CONDITION ?
OUT          FLAG OUT

YES

S686

NO — DETECTION CONDITION
FLAG OF LAST CYCLE IN ≠ 0 ?

YES

S687

DETECTION
CONDITION
YES — FLAG OF    ≠ DETECTION
LAST CYCLE   CONDITION ?
IN           FLAG IN

S688
DETECTION
CONDITION
FLAG OUT = 0

NO

RETURN

FIG. 25

ROTATIONAL
ANGLE

ROTATIONAL
TORQUE

PROCESSING
UNIT

FIG. 26

**European Patent Office**

**EUROPEAN SEARCH REPORT**

Application Number

EP 02 02 0355

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 239 490 A (TAKAHASHI TADASHI ET AL) 24 August 1993 (1993-08-24) * column 2, line 8 - line 17 * * column 2, line 67 - column 3, line 12 * * column 5, line 6 - line 27 * * column 5, line 63 - column 7, line 20 * * claims 1,2,6,11 * * figures 1-3 * | 1,3,8, 11,14 | G01B7/30 |
| A | | 2,4-7,9, 10,12,13 | |
| D,X | EP 1 087 218 A (KOYO SEIKO CO) 28 March 2001 (2001-03-28) * column 88, line 40 - column 96, line 52 * * claims 31-34 * * figures 63-68 * | 1-9,11, 14 | |
| A | | 10,12,13 | |
| | | | **TECHNICAL FIELDS SEARCHED (Int.Cl.7)** |
| | | | G01B |

The present search report has been drawn up for all claims

| Place of search | Date of completion of the search | Examiner |
|---|---|---|
| MUNICH | 28 October 2002 | Grand, J-Y |

EPO FORM 1503 03.82 (P04C01)

**ANNEX TO THE EUROPEAN SEARCH REPORT
ON EUROPEAN PATENT APPLICATION NO.**                EP 02 02 0355

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2002

| Patent document cited in search report | | Publication date | Patent family member(s) | | Publication date |
|---|---|---|---|---|---|
| US 5239490 | A | 24-08-1993 | JP | 2515891 B2 | 10-07-1996 |
| | | | JP | 3105225 A | 02-05-1991 |
| | | | DE | 4029828 A1 | 25-04-1991 |
| EP 1087218 | A | 28-03-2001 | JP | 2000352502 A | 19-12-2000 |
| | | | JP | 2001133338 A | 18-05-2001 |
| | | | EP | 1087218 A1 | 28-03-2001 |
| | | | WO | 0062031 A1 | 19-10-2000 |
| | | | US | 2002124663 A1 | 12-09-2002 |
| | | | JP | 2001201313 A | 27-07-2001 |
| | | | JP | 2001311605 A | 09-11-2001 |
| | | | JP | 2001311669 A | 09-11-2001 |
| | | | JP | 2001324321 A | 22-11-2001 |
| | | | JP | 2001324304 A | 22-11-2001 |
| | | | JP | 2001324394 A | 22-11-2001 |

EPO FORM P0459

For more details about this annex : see Official Journal of the European Patent Office, No. 12/82